# EUROPÄISCHE PATENTSCHRIFT

(11) **EP 0 681 005 B1**
(45) Veröffentlichungstag und Bekanntmachung des Hinweises auf die Patenterteilung: **28.07.1999**
(21) Anmeldenummer: 95106075.5
(22) Anmeldetag: 24.04.1995
(51) Int. Cl.: C09B 62/04, C09B 62/503, C09B 67/22

(54) **Triphendioxazin-Reaktivfarbstoffe**
Triphendioxazine reactive dyes
Colorants réactifs triphènedioxaziniques

(30) Priorität: 05.05.1994 DE 4415780
(43) Veröffentlichungstag der Anmeldung: 08.11.1995
(73) Patentinhaber: BAYER AG, 51368 Leverkusen (DE)
(72) Erfinder: Harms, Wolfgang, Dr., D-51519 Odenthal (DE); Ehrenberg, Stefan, Dr., D-50670 Köln (DE)

(56) Entgegenhaltungen:
- EP-A- 0 070 807
- EP-A- 0 074 928
- EP-A- 0 472 975
- EP-A- 0 499 588
- EP-A- 0 568 860
- EP-A- 0 629 667
- EP-A- 0 652 262

## Beschreibung

Die vorliegende Erfindung betrifft neue Reaktivfarbstoffe, Gemische mit diesen Reaktivfarbstoffen, Verfahren zu ihrer Herstellung und ihre Verwendung.

Reaktivfarbstoffe zum Färben von Cellulosematerialien sind in großer Zahl bekannt. Darunter werden wegen ihrer hohen Farbstärke Triphendioxazin-Reaktivfarbstoffe für klare Blautöne zunehmend wichtig.

Derartige Farbstoffe sind insbesondere bekannt aus EP-A-499 588 (= JP-A-050 981 175), EP-A-74 928 (= JP-A-58/065 759), EP-B-70 807, EP-A-485 336 (= US-A-5 207 801), EP-A-474 596 (= JP-A-4 255 762); EP-A-472 975, EP-A-568 860 (= JP-A-60 49 381), EP-A-576 123 und EP-A-260 227 (= US-A-4 841 049).

Im Hinblick auf die immer höheren Anforderungen an Reaktivfärbungen in wirtschaftlicher und ökologischer Hinsicht sind Farbstoffe dieses Chromophor-Typs aber noch verbesserungsbedürftig. Insbesondere ist der Fixiergrad noch unbefriedigend, so daß ein erheblicher Anteil des Reaktivfarbstoffes in hydrolysierter Form dem Färbeprozeß verlorengeht.

Darüber hinaus ist auch das Aufbauvermögen dieser Farbstoffe noch verbesserungsbedürftig.

Die nachfolgend beschriebenen Farbstoffe zeigen hinsichtlich der erwähnten Anforderungen deutlich verbesserte Eigenschaften.

Die Erfindung betrifft Reaktivfarbstoffe der Formel 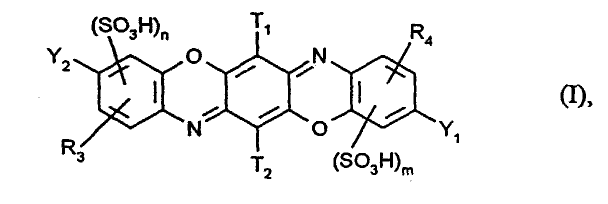 worin
- Y₁ =: ein Rest der Formel 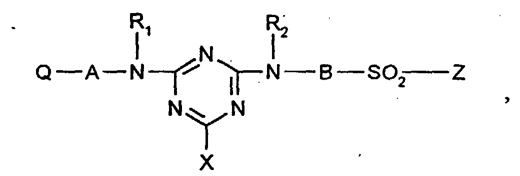
worin
- A=: C₂-C₆-Alkylen, gegebenenfalls substituiert durch OH, OSO₃H oder unterbrochen durch Heteroatome, Arylen, gegebenenfalls substituiert durch SO₃H, COOH, C₁-C₂-Alkyl, C₁-C₂-Alkoxy,
- B =: -CH₂CH₂- ,
- R₁ =: H, C₁-C₄-Alkyl, gegebenenfalls substituiert durch OH, OSO₃H, COOH, CONH₂, SO₃H,
- R₂ =: Phenyl, gegebenenfalls substituiert durch SO₃H, COOH, C₁-C₂-Alkyl, C₁-C₂-Alkoxy,
- Q =: 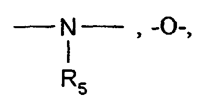
worin
- R₅ =: H, C₁-C₄-Alkyl oder mit R₁ zu einem vorzugsweise 5- bis 6-gliedrigen Ring verknüpft ist,
- X =: F, Cl,
- Z =: -CH=CH₂ oder -CH₂-CH₂-OSO₃H,
- Y₂ =: Amino; C₁-C₄-Alkylamino, gegebenenfalls substituiert durch OH, OSO₃H, SO₃H, COOH, CONH₂, C₁-C₂-Alkoxy; C₁-C₄-Alkoxy, gegebenenfalls substituiert durch OH, OSO₃H, C₁-C₂-Alkoxy oder unterbrochen durch Heteroatome; Aroxy, gegebenenfalls substituiert durch SO₃H, C₁-C₂-Alkyl, C₁-C₂-Alkoxy.
- m =: 1 oder 2,
- n =: 1 oder 2,
- T₁, T₂ =: unabhängig voneinander H, Cl, Br, C₁-C₄-Alkoxy, C₁-C₄-Alkyl, gegebenenfalls substituiertes Phenoxy oder Phenyl,
- R₃, R₄ =: unabhängig voneinander H, C₁-C₂-Alkyl, C₁-C₂-Alkoxy, Carboxy, Halogen (Cl, Br).

C₂-C₆-Alkylen-Brückenglieder A sind beispielsweise:
Ethylen, 1,3-Propylen, 1,2-Propylen, 2-Hydroxy-1,3-propylen, 2-Sulfato-1,3-propylen, 1,4-, 1,3-, 2,3-Butylen, 1,5-Pentylen, 1,6- und 2,5-Hexylen, 1,4- oder 1,3-Cyclohexylen, -(CH₂-CH₂-O)ₙ-CH₂-CH₂- mit n = 1 oder 2, -CH₂-CH₂-S-CH₂-CH₂-,

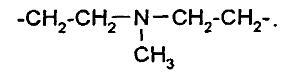

Geeignete Arylenreste A sind beispielsweise:
1,2-, 1,3- und 1,4-Phenylen, 4-Sulfo-1,3-phenylen, 6-Sulfo-1,3-phenylen, 2- oder 3-Sulfo-1,4-phenylen, 4,6-Disulfo-1,3-phenylen, 2- oder 3-Methyl-1,4-phenylen, 4-oder 6-Methyl-1,3-phenylen, 5-Methyl-1,2-phenylen, 3-Chlor-1,4-phenylen, 4-Chlor-1,3-phenylen, 4-Chlor-1,2-phenylen sowie die entsprechenden durch Sulfogruppen substituierten Methyl- und Chlorphenylenreste.

Reste R₁ sind außer Wasserstoff zum Beispiel:
Methyl, Ethyl, 1-Propyl, 2-Hydroxyethyl, 2-Sulfatoethyl, 2-Sulfoethyl, 2-Carboxyethyl, 2-Aminocarbonylethyl, 2-Methoxy- oder 2-Ethoxycarbonylethyl, 2-Carboxy-1-propyl.

Reste R₂ sind:
Phenyl, 2-, 3-, 4-Sulfophenyl, 2-, 3-, 4-Methylphenyl, 2-, 3-, 4-Methoxy- oder -Ethoxyphenyl sowie die entsprechenden durch Sulfogruppen substituierten Methyl-, Methoxy- oder Ethoxyphenylreste, 2-, 3-, 4-Carboxyphenyl.

Reste R₅ können außer Wasserstoff beispielsweise sein:
Methyl, Ethyl, 2-Hydroxyethyl, 2-Sulfatoethyl.

Die Reste R₁ und R₅ können auch direkt miteinander verknüpft, die Gruppierung 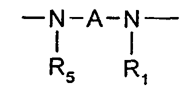 ein Piperidindiyl-Rest sein.

Als Reste Y₂ sind außer NH₂ zu nennen:
Methylamino, Ethylamino, 1- oder 2-Propylamino, 1- oder 2-Butylamino, 2-Hydroxyethylamino, 2-Sulfatoethylamino, 2-Sulfoethylamino, 2-Carboxyethylamino, 2-Aminocarbonylethylamino, 2-Methyl-1-propylamino, 2-Hydroxy-1-propylamino, 2-Sulfato-1-propylamino, 2-Carboxy-2-Amino-1-propylamino, 2-Methoxyethylamino, 2-Ethoxyethylamino, 2-(2'-Hydroxyethoxy)-ethylamino, 2-(2'-Sulfatoethoxy)-ethylamino, C₁-C₄-Alkoxy-Reste für Y₂ sind beispielsweise Methoxy, Ethoxy, 2-Hydroxyethoxy, 2-Sulfatoethoxy, 2-Hydroxy-1-propoxy, 2-Sulfato-1-propoxy, 2,3-Dihydroxy-1-propoxy, 2,3-Disulfato-1-propoxy.

Aroxyreste für Y₂ können zum Beispiel sein:
Phenoxy, 2-, 3-, 4-Sulfophenoxy, 2-, 3-, 4-Kresoxy, 2-, 3-, 4-Methoxyphenoxy, 1-oder 2-Naphthoxy sowie die durch Sulfogruppen substituierten Kresoxy-, Methoxyphenoxy- oder Naphthoxy-Reste.

Die Erfindung betrifft weiterhin Mischungen von erfindungsgemäßen Farbstoffen der Formeln (I), insbesondere (II), 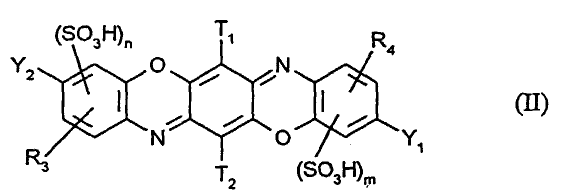 mit an sich bekannten Farbstoffen der Formel (III) 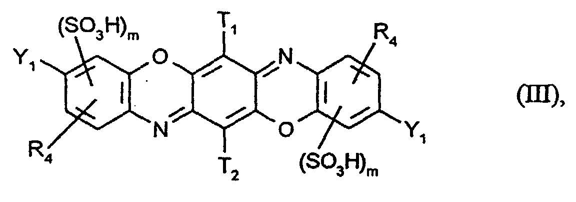 worin
Y₁, Y₂, R₃, R₄, T₁, T₂, m und n die oben angegebene Bedeutung haben.

Besonders bevorzugt sind Mischungen von Reaktivfarbstoffen der Formeln (II) und (III), in denen R₃, R₄ = H und T₁, T₂ = Halogen, insbesondere Cl.

Weiterhin bevorzugt sind Farbstoffgemische der Formeln 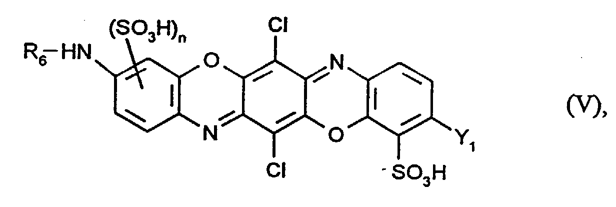 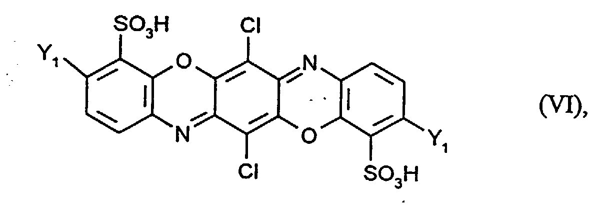 worin
- R₆ =: H, Methyl, Ethyl, 2-Hydroxyethyl, 2-Sulfatoethyl, 2-Sulfato-1-propyl und
Y₁ und n die oben angegebene Bedeutung haben.

Weiterhin bevorzugt sind Farbstoffgemische der Formeln 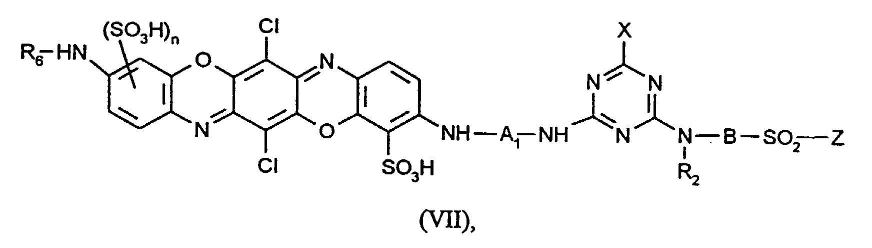 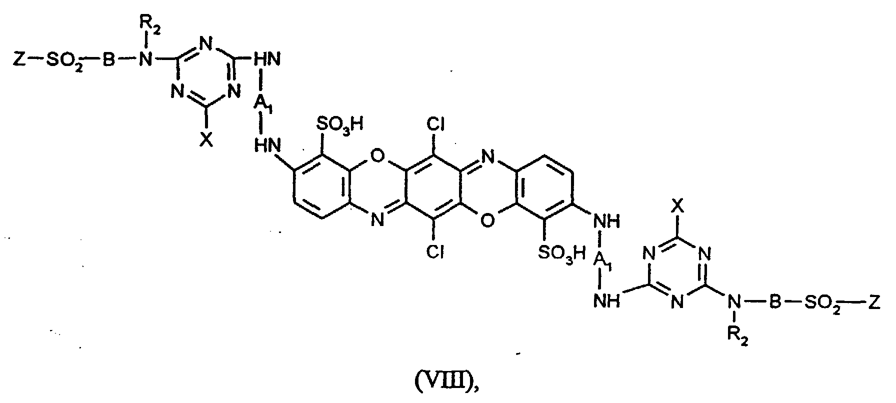 worin
- A₁ =: -CH₂-CH₂-, -(CH₂)₃-, 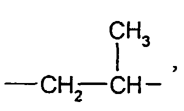 -(CH₂)₄-, 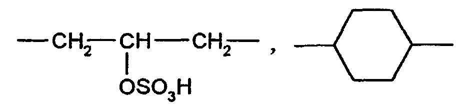 und
R₆, n, X, R₂, B und Z die oben angegebene Bedeutung haben.

Besonders bevorzugt sind Farbstoffgemische der Formeln 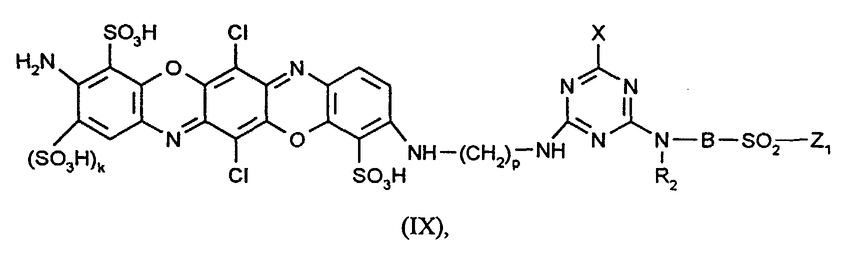 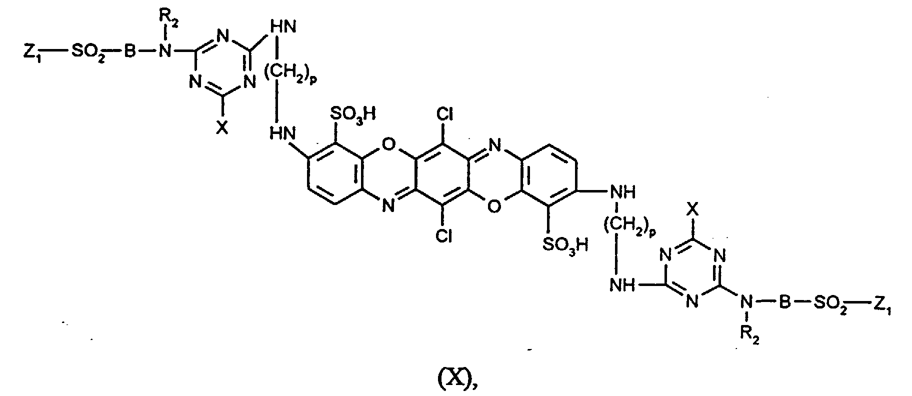 worin
- Z₁ =: -CH=CH₂, -CH₂-CH₂-OSO₃H,
- p =: 2 oder 3,
- k =: 0 oder 1 und
n, X, R₂ und B die oben angegebene Bedeutung haben.

Ganz besonders bevorzugt sind Farbstoffgemische der Formeln 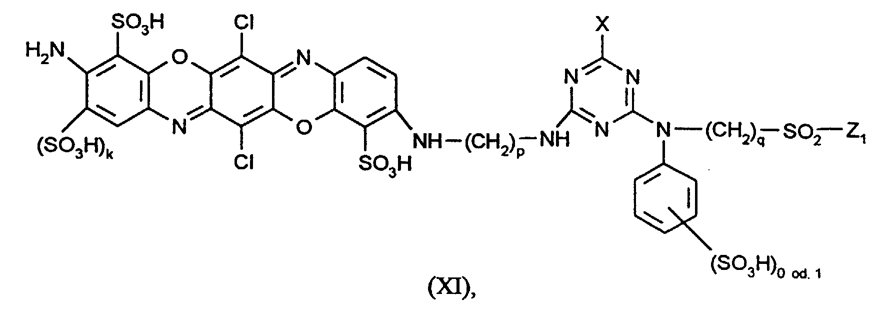 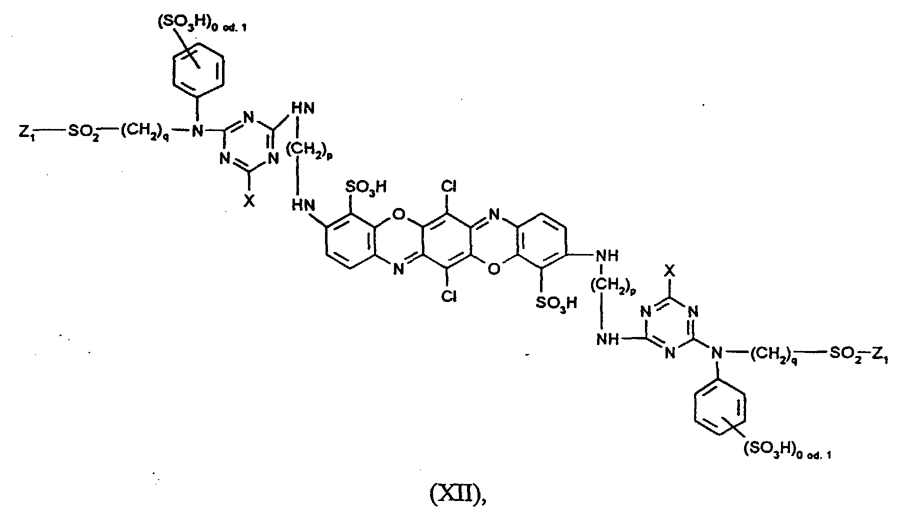 worin
- q =: 2 und
k, p, X und Z₁ die oben angegebene Bedeutung haben.

Die Herstellung der Farbstoffe (I) erfolgt beispielsweise durch Umsetzungen entsprechender Farbstoffe (XIII)-(XIV) 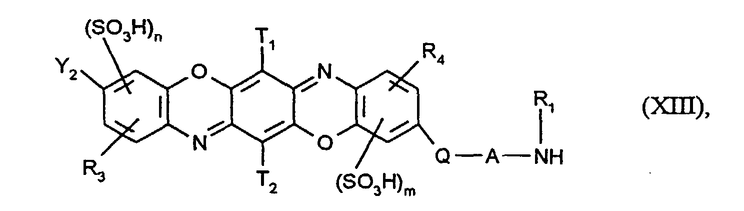 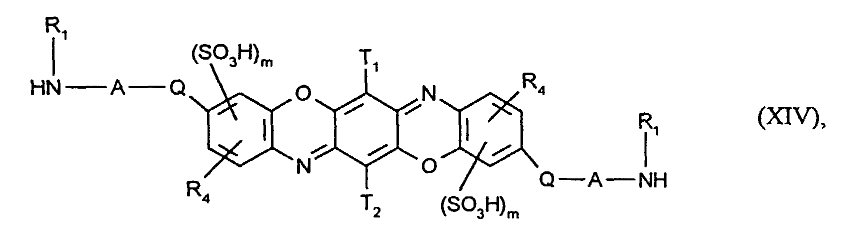 worin
Y₂, R₃, R₄, T₁, T₂, m, n, Q, A und R₁ die oben angegebene Bedeutung haben,
mit Reaktivkomponenten der Formel 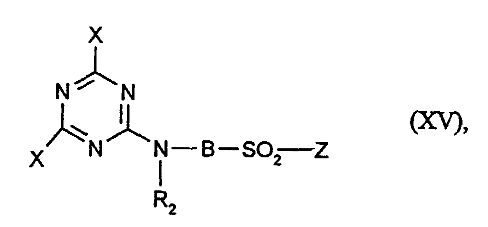 worin
X, R₂, B und Z die oben angegebene Bedeutung haben.

Reaktivkomponenten der Formel (XV) lassen sich durch Kondensation von Trihalogentriazinen der Formel 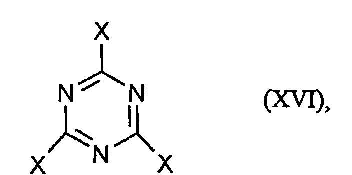 worin
- X =: F, Cl,
mit Aminosulfon-Komponenten der Formel 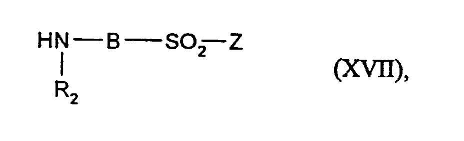 worin
R₂, B und Z die oben angegebene Bedeutung haben, herstellen.

Eine andere Möglichkeit zur Herstellung von Farbstoffen (I) besteht in der Kondensation von Chromophoren der Formel (XIII) mit den Trihalogentriazinen (XVI) zu Farbstoffen der Formel 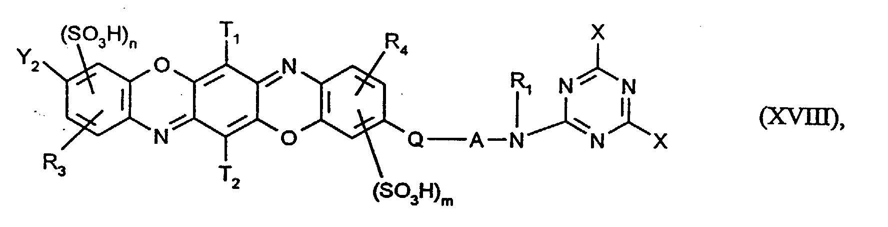 worin
Y₂, R₃, R₄, T₁, T₂, m, n, Q, A, R₁ und X die oben angegebene Bedeutung haben,
und deren weitere Umsetzung mit molaren Mengen Aminosulfon der Formel (XVII).

Aminosulfone der Formel (XVII) sind beschrieben in EP-A-0 568 860, 0 568 876, 0 385 426, 0 085 025 und DE-A-4 007 049.

Als Beispiele für Aminosulfone der Formel (XVII) sind zu nennen:

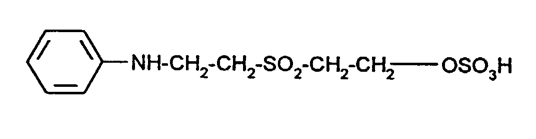

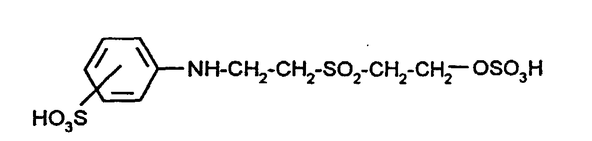

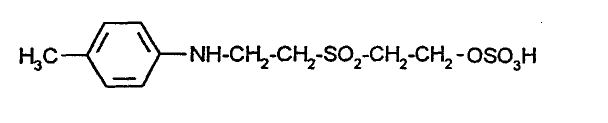

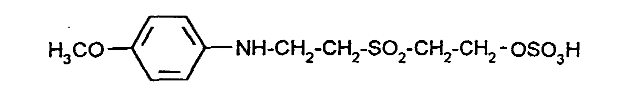

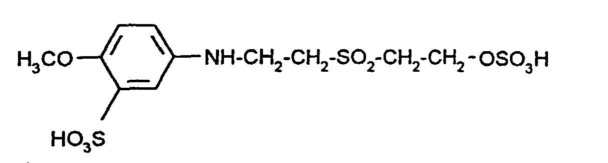

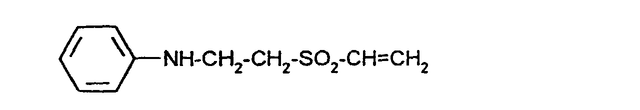

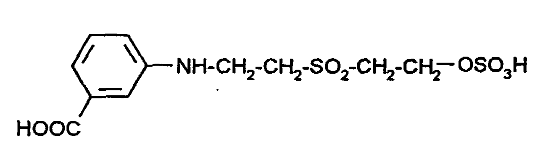

Die Herstellung von Verbindungen der Formeln (XIII)-(XIV) erfolgt nach an sich bekannten Methoden durch Kondensation von 1,4-Benzochinonen der Formel 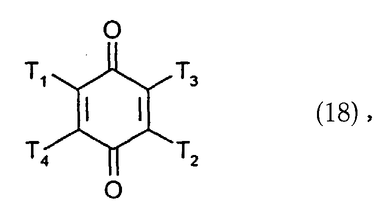 worin
- T₃, T₄ =: Wasserstoff, Cl, Br, O-Alkyl oder O-Aryl und
- T₁, T₂: die oben angegebenen Bedeutung haben,
mit vorzugsweise annähernd molaren Mengen Aminen der Formeln 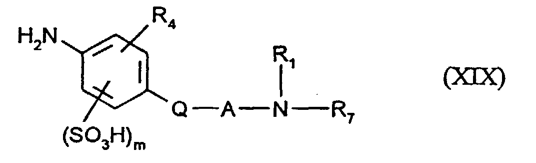 und 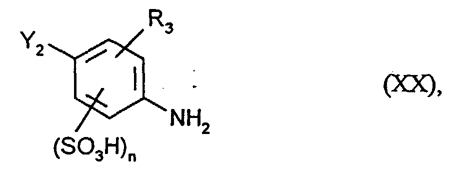 worin
- R₇ =: H, Alkylcarbonyl
und
A, Q, R₁, R₃, R₄, Y₂ die oben angegebene Bedeutung haben,
zu Anilgemischen der Formeln 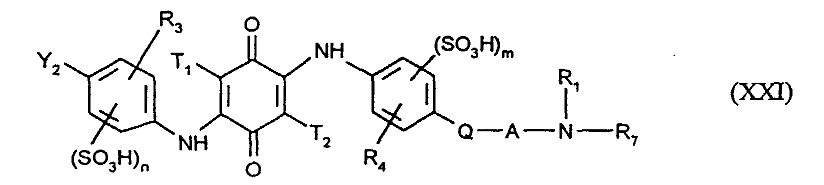 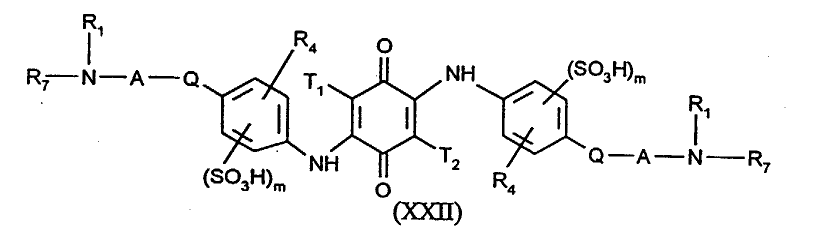 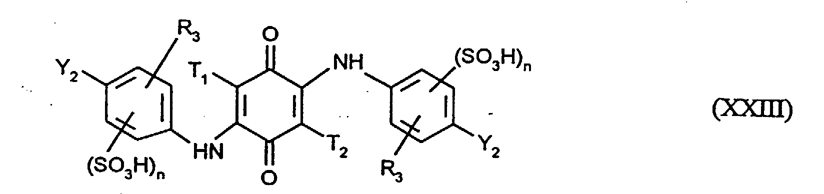 und nachfolgenden Ringschluß der Anilgemische (XXI)-(XXIII) zu den entsprechenden Triphendioxazingemischen. Im Zuge dieser letzten Operation können gegebenenfalls Sulfonsäuregruppen eingeführt werden. Weiterhin kann zusätzlich gegebenenfalls, wenn nicht vorher erfolgt, eine Umwandlung der Funktion 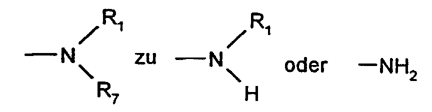 durch Verseifung vorgenommen werden.

Je nach den beim Ringschluß angewandten Reaktionsbedingungen können die Sulfonsäuregruppen in den Benzringen der Triphendioxazine entweder in den o- oder in den p-Stellungen zu den Ringsauerstoffatomen des Dioxazin-Systems auftreten.

Entsprechend den Löslichkeitsverhältnissen der Einzelkomponenten in den Triphendioxazin-Gemischen oder in den Anilgemischen (XXI)-(XXIII) und je nach den Aufarbeitungsbedingungen kann es zu Verschiebungen in den Mengenverhältnissen der Einzelkomponenten gegenüber dem ursprünglichen, nach der Synthese vorliegenden Verhältnis kommen.

So kann sich beispielsweise bei der Isolierung des Anilgemisches die Komponente (XXIII) bevorzugt in der Mutterlauge anreichern.

Die Kondensation der Benzochinone der Formel (18) mit den Aminen (XIX) und (XX) erfolgt am besten in wäßrigem oder wäßrig-organischem Medium unter Zugabe alkalischer Kondensationsmittel bei pH-Werten von 3 bis 11, vorzugsweise 4 bis 8, und Temperaturen von 20 bis 90°C, vorzugsweise 40 bis 70°C, oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natrium- oder Kaliumhydrogencarbonat, Natriumcarbonat, Natrium- oder Kaliumacetat, Natronlauge, Kalilauge, Natriumphosphate, Natriumborat, Lithiumhydroxid, Lithiumcarbonat.

Im allgemeinen fallen die Kondensationsprodukte der Formel (XXI)-(XXIII) als schwerlösliche, braune Produkte aus.

Eine Variante zur Herstellung von Verbindungen der Formel (XXI)-(XXIII) besteht in der Addition von Aminen (XIX) und (XX) an 1,4-Benzochinone der Formel 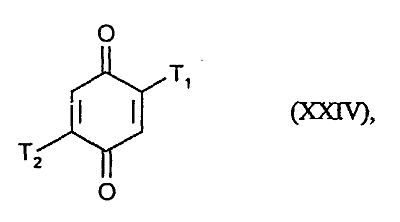 worin
T₁ und T₂ die oben angegebene Bedeutung haben,
und Oxidation der primär entstehenden Addukte.

Der Ringschluß der Chinonkondensationsprodukte (XXI)-(XXIII) zu den Triphendioxazinen kann nach an sich bekannten Methoden, wie sie in den Deutschen Offenlegungsschriften 2 122 262, 2 124 080, 2 302 383, 2 344 781, 2 503 611, 2 823 828 und in der Britischen Patentschrift 2 019 872 beschrieben sind, insbesondere in konzentrierter Schwefelsäure und vor allem in Oleum mit SO₃-Gehalten von 1 bis 50 % bei Temperaturen von 10 bis 80°C, gegebenenfalls mit Zusatz von Oxidationsmitteln wie Kalium- oder Ammoniumperoxidisulfat, Braunstein oder organischen Peroxiden, vorgenommen werden.

Als Beispiele für Amine der Formel (XIX) seien genannt:

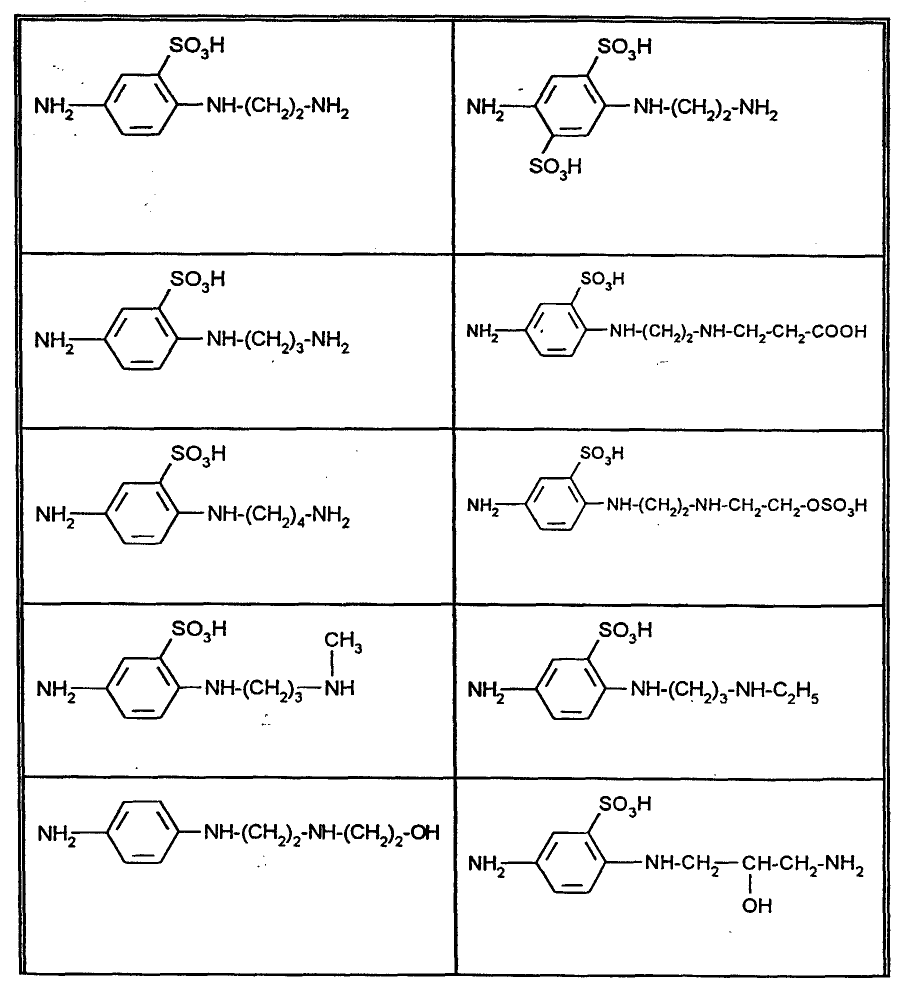

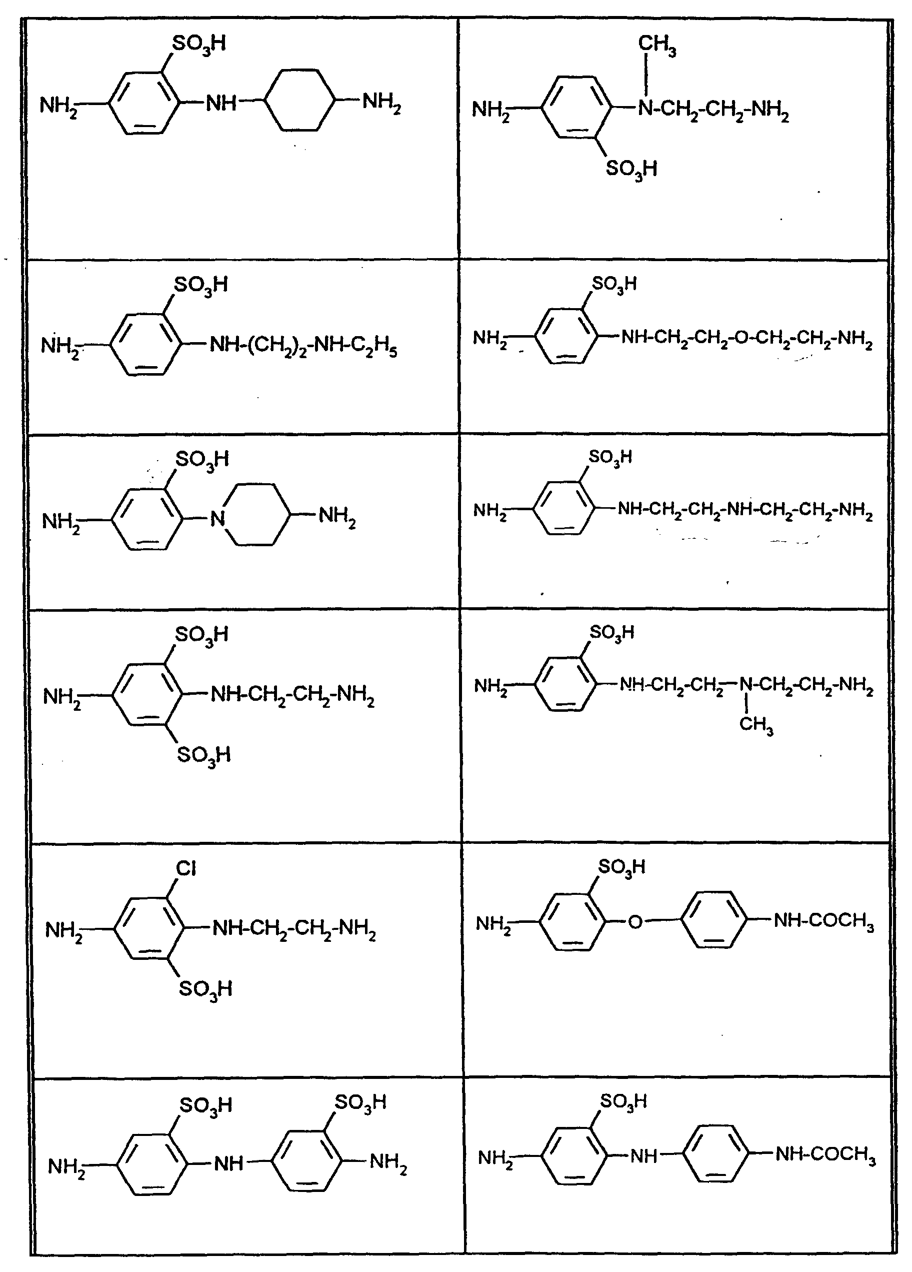

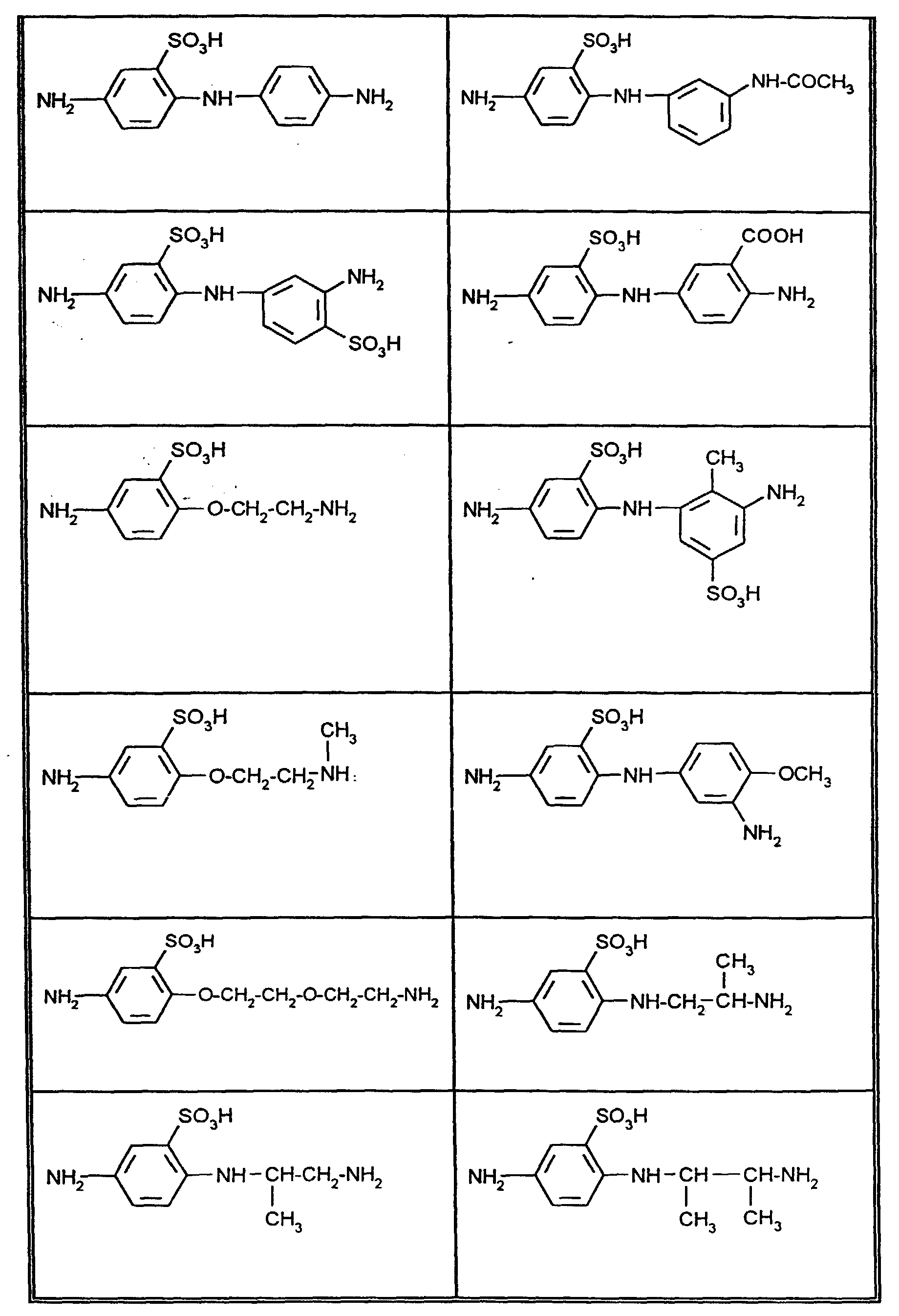

Als Beispiele für Amine der Formel (XX) sind aufzuführen:

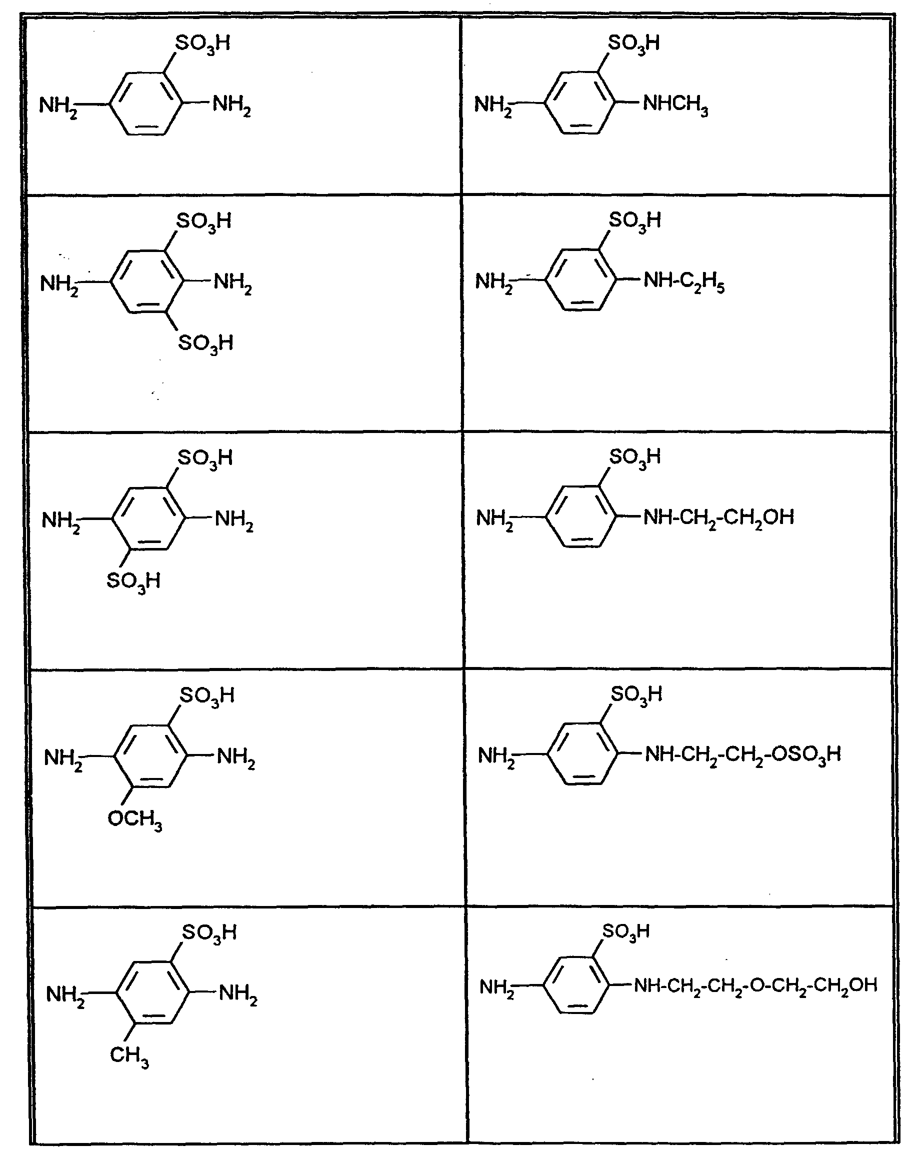

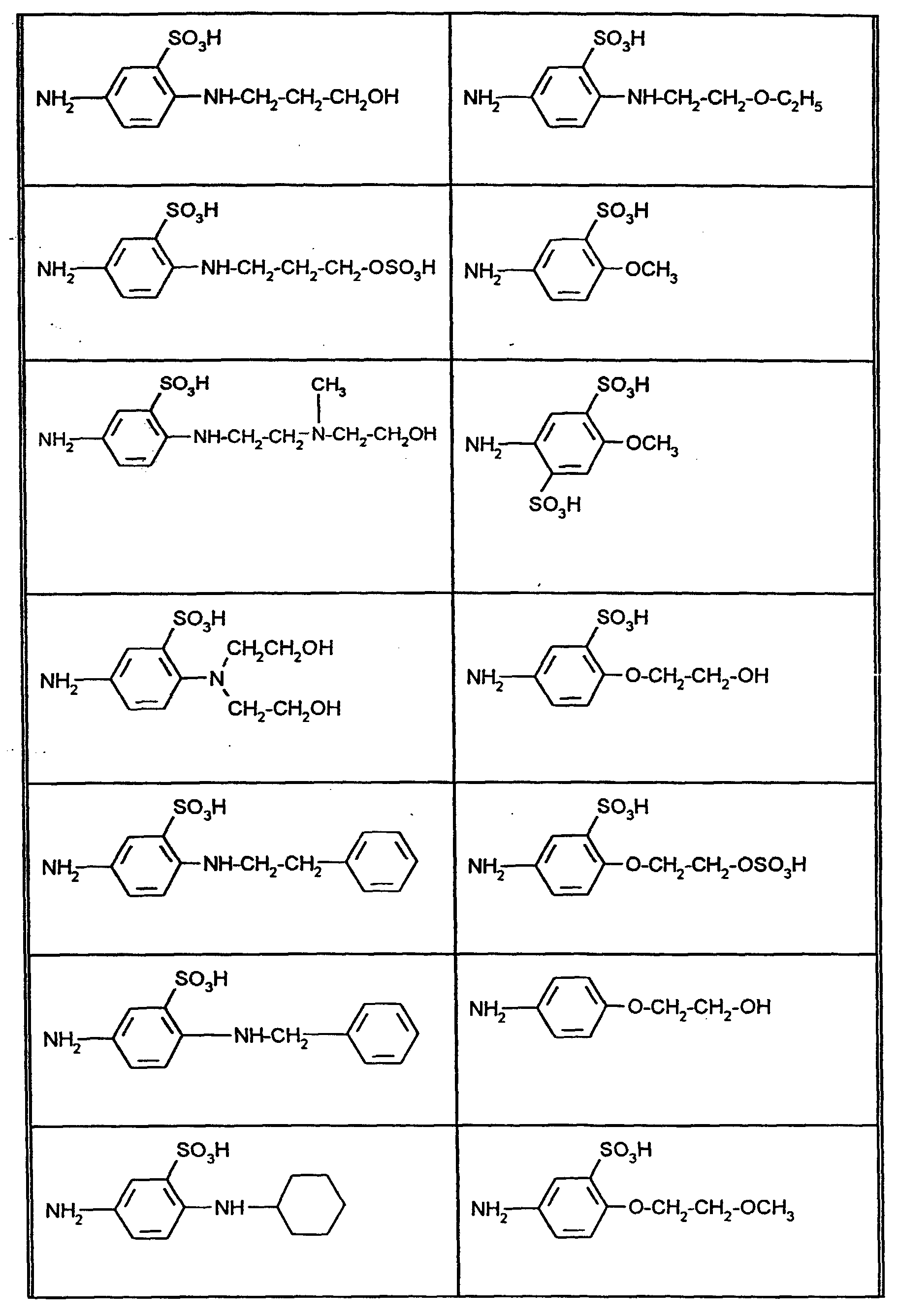

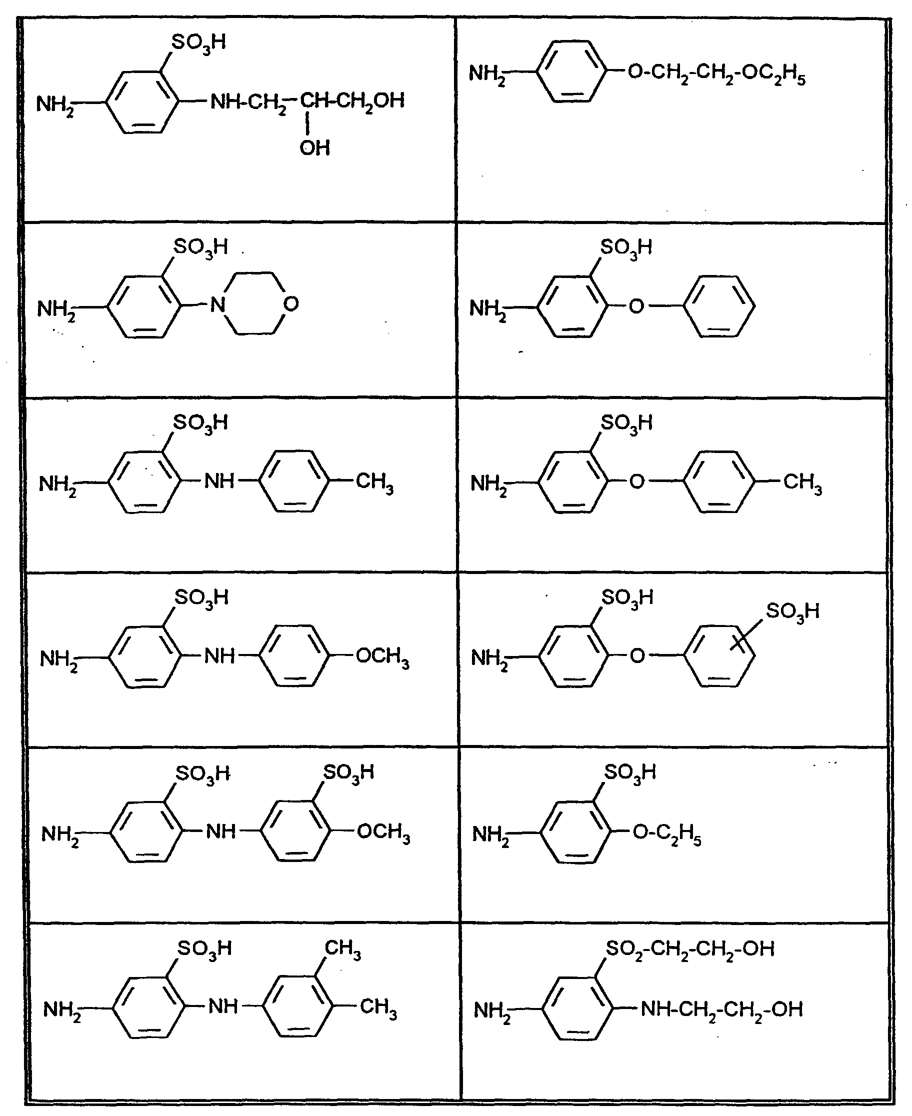

Die für die Formeln (XIX) und (XX) beispielhaft genannten Amine stellen lediglich eine Auswahl aus einer größeren Zahl weiterer möglicher Amine dar.

Die erfindungsgemäßen Farbstoffe der Formeln (I) und (II) fallen gegebenenfalls mit den symmetrischen Verbindungen der allgemeinen Formel (III) und gegebenenfalls mit Verbindungen der Formel (IV), 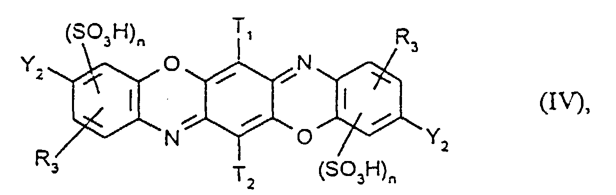 worin R₃, Y₂, T₁, T₂ und n die oben angegebene Bedeutung haben, an.

Das Molprozentverhältnis der Farbstoffbestandteile der Formeln (II):(III):(IV) im Rahmen der Formel (I) kann in den Grenzen (20-80):(80-20):(30-0), bevorzugt in den Grenzen (40-70):(40-25):(20-5) schwanken.

Die erfindungsgemäßen Farbstoffe der Formel (I) geben auf Cellulose- sowie natürlichen und synthetischen Polyamidmaterialien Färbungen, die eine hohe Farbstärke aufweisen.

Als wasserlösliche Farbstoffe finden die neuen Farbstoffe bevorzugtes Interesse für das Färben hydroxylgruppen- und amidgruppenhaltiger Textilmaterialien, insbesondere von Materialien aus nativer und regenerierter Cellulose sowie synthetischen Polyamidmaterialien, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte Färbungen und Drucke. Auf Cellulosefasern, insbesondere auf Baumwolle, zeichnen sich die neuen Farbstoffe durch hohe Fixiergrade und sehr gutes Aufbauvermögen aus.

Die Formeln der wasserlöslichen Reaktivfarbstoffe in der Beschreibung und in den Beispielen sind die der freien Säuren. Isoliert und angewandt werden die Farbstoffe in Form der Lithium-, Natrium- oder Kaliumsalze.

Die in den nachfolgenden Beispielen und Tabellen angegebenen Formeln beziehen sich, wenn nicht anders vermerkt, in der Regel auf jeweils eines der bei den Umsetzungen entstehenden Reaktionsprodukte. Dieses bezieht sich auch auf die bezüglich der Stellung der Sulfogruppen am Triphendioxazinsystem isomeren Verbindungen.

### Beispiel 1

a) Herstellung der Anilkomponente
   Zu einer unter Stickstoffatmosphäre hergestellten Lösung von 55,4 g 4-(β-Aminoethylamino)-3-sulfo-anilin und 45,1 g 2,5-Diaminobenzolsulfonsäure in 1000 ml Wasser, die auf pH 7 gestellt ist, gibt man bei 50°C 59,0 g Chloranil hinzu und hält im Reaktionsgemisch den pH-Wert auf 5,5-5,8. Nach Beendigung des Sodaverbrauches wird der Ansatz auf Raumtemperatur abgekühlt, der braune Niederschlag abgesaugt, mit Wasser und Aceton gewaschen und getrocknet. Überwiegender Bestandteil in dem aus dem gebildeten Gemisch dreier Substanzen A-C ausgefallenen Niederschlag ist die asymmetrische Verbindung der Formel A, daneben die symmetrische Verbindung B, während die symmetrische Verbindung C sich in der Mutterlauge und Wäsche stark anreichert. 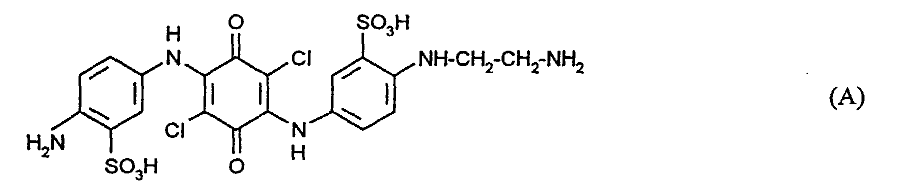 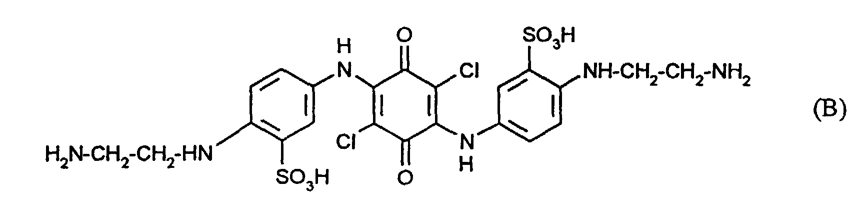 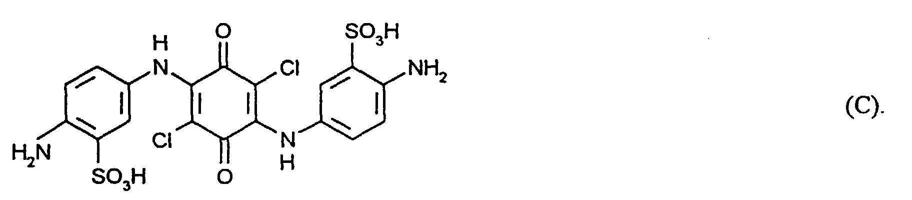
b) Cyclisierung zum Triphendioxazin
   85,0 g des hergestellten Anilzwischenproduktes werden in 240 ml 20 %iges Oleum bei -5 bis -10°C eingetragen. Man erwärmt anschließend auf 25°C, rührt die Mischung nach, bis alles Anil gelöst ist und trägt nun bei 25°C 80,3 g Kaliumperoxodisulfat ein. Man rührt noch 1 Stunde bei Raumtemperatur nach und gießt nach Beendigung der Reaktion die Lösung auf Eis und Wasser.
   Die erhaltene Fällung wird abgesaugt, mit 5 %iger Salzsäure und Wasser gewaschen, abschließend mit Isopropanol, bis der Ablauf sulfatfrei ist. Das Produkt entspricht den Formeln: 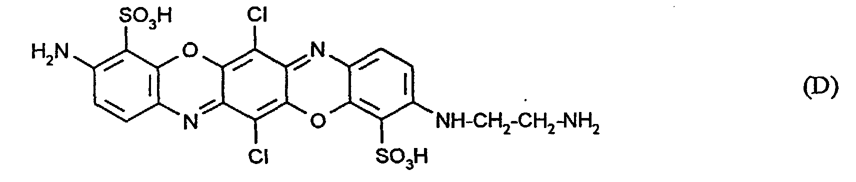 daneben 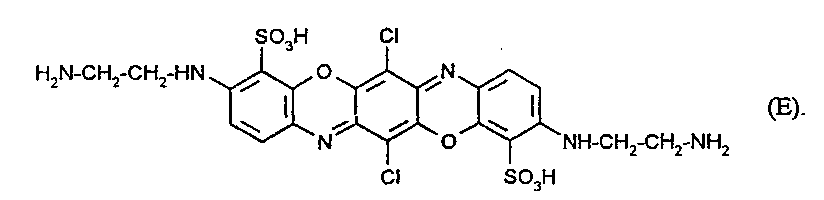
c) Herstellung der Reaktivkomponente
   46,7 g einer Komponente der Formel 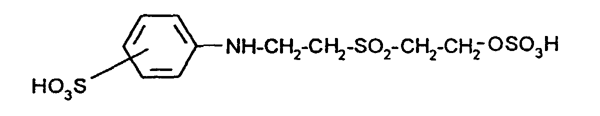 in Form einer auf pH 7 gestellten Lösung in 250 ml Wasser (Herstellung siehe unten) werden mit 3,7 g Natriumfluorid verrührt. Zu der Lösung läßt man bei 0°C zügig 11,6 ml Cyanurfluorid zulaufen. Dabei sinkt der pH-Wert und wird durch Zutropfen von 10 %iger Sodalösung bei 2,5-2,7 gehalten.
d) Kondensation zum Reaktivfarbstoff
   35,0 g des im Abschnitt b) erhaltenen Triphendioxazin-Gemisches werden in 700 ml Wasser suspendiert und durch Zugabe von Natronlauge bis zum pH 12 gelöst.
   Etwa 5 % der im Abschnitt c) hergestellten Lösung der Reaktivkomponente werden in 100 ml Eiswasser vorgelegt. Man läßt nun die Lösungen der Triphendioxazinverbindung und der Reaktivkomponente gleichzeitig so zutropfen, daß jeweils aliquote Anteile beider Lösungen in Kontakt gelangen, und hält im Reaktionsgemisch den pH-Wert durch Zutropfen von 2N Natronlauge auf 8,5-8,7 und die Temperatur auf 0 bis 3°C.
   Wenn die Umsetzung beendet ist, erwärmt man den Ansatz auf Raumtemperatur und hält den pH-Wert noch 2 Stunden.
   Aus der erhaltenen Lösung wird das Farbstoffgemisch mit 23 % Kaliumchlorid ausgesalzen, abgesaugt und mehrmals mit 25 %iger Kaliumchloridlösung abgedeckt. Nach Zusatz von Phosphatpufferlösung vom pH 6 wird der Farbstoff bei 40°C im Vakuum getrocknet.
   Er entspricht einer Mischung gemäß dem Anteil der Komponente D im Abschnitt b) überwiegend der Formel 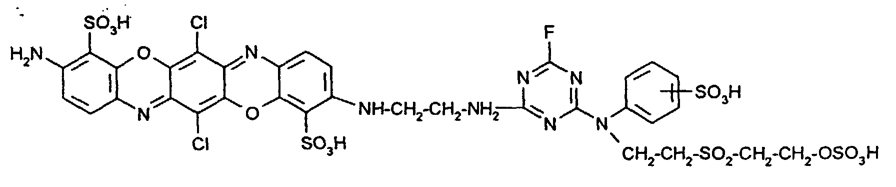 daneben der Formel 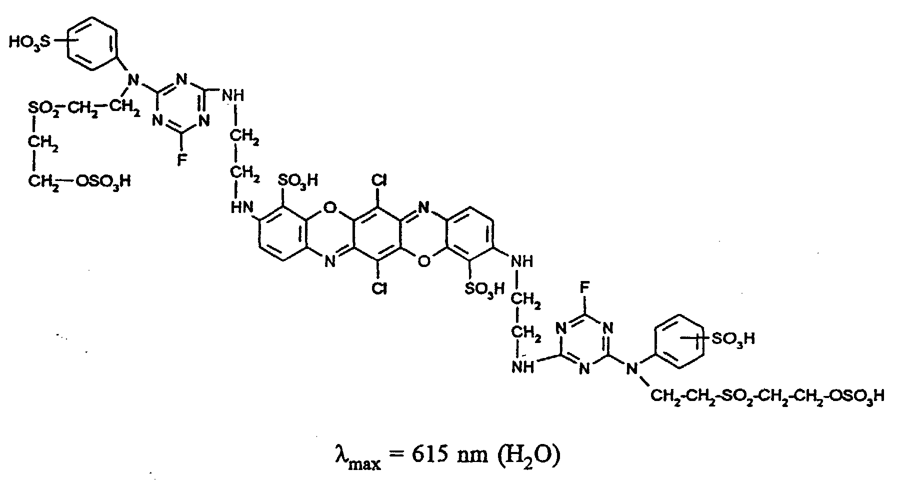 Das erhaltene Reaktivfarbstoff-Gemisch färbt Baumwolle aus langer Flotte mit hoher Fixierausbeute in brillanten Blautönen und zeigt hervorragendes Aufbauvermögen.
e) Herstellung der reaktiven Aminosulfonkomponente
   50,0 g der in EP-A-0 568 876, Beispiel 117, beschriebenen Verbindung der Formel 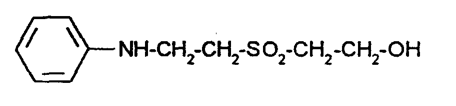 werden in 100 ml 20 %iges Oleum bei 25°C eingetropft. Man rührt nach bis zur vollständigen Lösung. 40 ml 65 %iges Oleum werden zugegeben und die Temperatur auf 40°C gehalten, bis eine chromatographische Probe vollständige Sulfonierung des Phenylrestes anzeigt.
   Man gibt die Oleumlösung auf eine Mischung von Eis und Wasser und stellt die erhaltene Lösung durch Eintragen von Kalziumcarbonat auf pH = 4,5 und verdünnt, falls nötig, mit Wasser. Man saugt vom Kalziumsulfat ab, wäscht dieses mit Wasser und engt die erhaltenen Filtrate ein. Eine Gehaltsbestimmung z.B. durch Titration eines aliquoten Teiles mit Natriumnitrit in saurem Medium ergibt eine Ausbeute von 94 % d.Th. bezogen auf eingesetztes Öl.
   Die erhaltene Lösung wird direkt weiter umgesetzt (vergleiche Abschnitt c).
   Will man das erhaltene Produkt isolieren, dampft man die Lösung im Vakuum zur Trockne ein. Man erhält ein dunkelbraunes zähes Öl, das allmählich teilweise kristallisiert, das sich jedoch beim Anreiben mit Isopropanol in ein graues Pulver verwandeln läßt. Man saugt es ab, wäscht mit Isopropanol und trocknet es.
   Nach Ausweis des ¹H-NMR-Spektrums liegt ein Isomeren-Gemisch im Verhältnis etwa 2:1 aus folgenden Verbindungen vor: 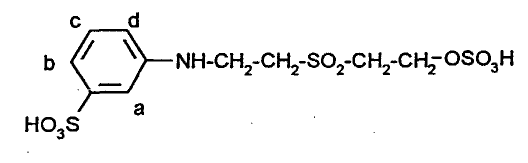 und 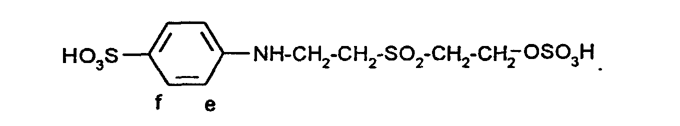
   ¹H-NMR in D₆-DMSO
   δ = 3,37-3,55 ppm (m, 6H)
   δ = 4,18-4,21 ppm (t, 2H)
   δ = 6,64-6,70 ppm (d, 2/3 x 1H) d
   δ = 6,86 ppm ppm (s, 2/3 x 1H) a
   δ = 6,90-6,94 ppm (d, 2/3 x 1H) b
   δ = 7,12-7,19 ppm (t, 2/3 x 1H) c
   δ = 6,56-6,60 ppm (d, 1/3 x 2H) e
   δ = 7,40-7,44 ppm (d, 1/3 x 2H) f.

### Beispiel 2

a) Herstellung der Anilkomponente
   55,4 g 4-(β-Aminoethylamino)-3-sulfoanilin und 64,3 g 2,5-Diaminobenzol-1,3-disulfonsäure werden in 1000 ml Wasser und 180 ml Isopropanol bei pH 6,0 unter Stickstoffatmosphäre gelöst.
   Man gibt 59,0 g bei 50°C Chloranil hinzu und hält den pH-Wert im Reaktionsgemisch mit 10 %iger Kaliumhydrogencarbonatlösung auf 6,0.
   Wenn die Reaktion beendet ist, kühlt man die Mischung unter Rühren auf 20°C ab und stellt dann den pH-Wert mit 36 %iger Salzsäure auf 3,0. Die braune Fällung wird abgesaugt, mit Wasser und anschließend mit Aceton bis zum praktisch farblosen Ablauf gewaschen. Die Trocknung erfolgt bei 70°C im Vakuum.
   Vorherrschender Bestandteil in dem aus dem gebildeten Gemisch dreier Substanzen A-C ausgefallenen Niederschlag ist die Komponente der Formel A, 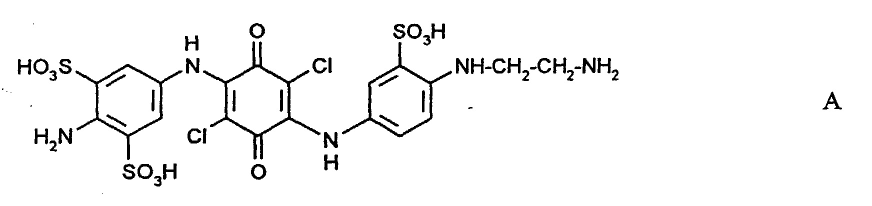 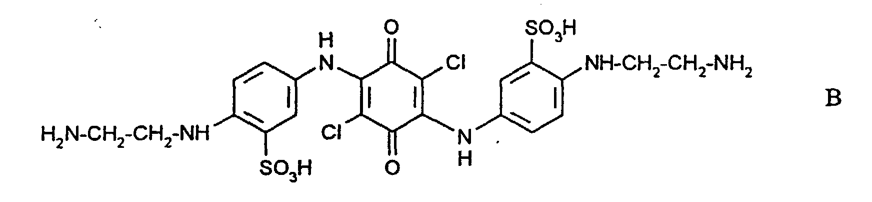 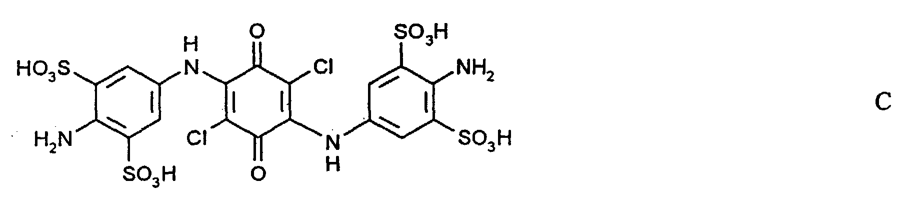 während sich die Komponente C fast vollständig in den Abläufen befindet.
b) Cyclisierung zum Triphendioxazin
   78,4 g Anilkomponente aus Abschnitt a) werden bei -10°C in 220 ml 20 %iges Oleum langsam eingetragen. Man läßt die Temperatur im Laufe einer Stunde auf 25°C ansteigen. Wenn vollständige Lösung eingetreten ist, trägt man in 1 Stunde bei 25°C unter Außenkühlung 71,3 g Kaliumperoxodisulfat ein, rührt 1 Stunde nach und gibt dann den Ansatz in eine Mischung von 1 kg Eis und 650 ml Wasser. Die Fällung wird abgesaugt, mit 1,5 l 5 %iger Salzsäure und 750 ml Wasser sulfatfrei gewaschen und bei 50°C im Vakuum getrocknet. Das Produkt ist eine Mischung und entspricht der Formel 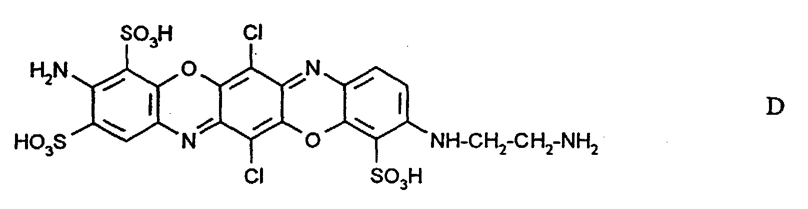 überwiegend und daneben der Formel 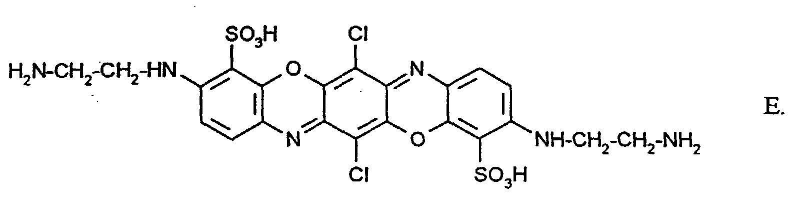
c) Kondensation zum Reaktivfarbstoff
   39,8 g des erhaltenen Triphendioxazin-Gemisches werden in 750 ml Wasser suspendiert und durch Zugabe von ca. 40 ml 4N Natronlauge bis pH 11,4 gelöst.
   Man stellt die Reaktivkomponente des Beispiels lc) in gleicher Menge, wie dort beschrieben, her.

100 ml Eiswasser und 5 % der hergestellten Reaktivkomponente werden vorgelegt. Man läßt im Gleichtakt jeweils aliquote Teile der Lösungen der Reaktiv- und der Triphendioxazinkomponente in 30-45 Minuten zulaufen und hält durch Zutropfen von 10 %iger Natronlauge den pH-Wert im Reaktionsgemisch auf 8,5-8,7, die Temperatur auf 0°C.

Ist die Umsetzung beendet, hält man den pH-Wert nunmehr bei Raumtemperatur noch 2 Stunden in den obigen Grenzen.

Die Lösung des Farbstoffgemisches kann nach Zusatz von 2 g Phosphatpuffergemisch (pH 6) entweder im Vakuum eingedampft oder sprühgetrocknet werden, oder man salzt durch Zusatz von 23 % Kaliumchlorid aus, saugt ab, wäscht mit 25 %iger Kaliumchloridlösung und trocknet nach Zusatz von Phosphatpuffer bei 50°C im Vakuum.

Der erhaltene Farbstoff enthält als überwiegenden Bestandteil das Produkt der Formel 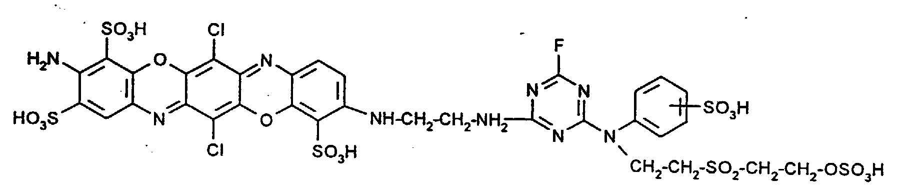 daneben das der Formel

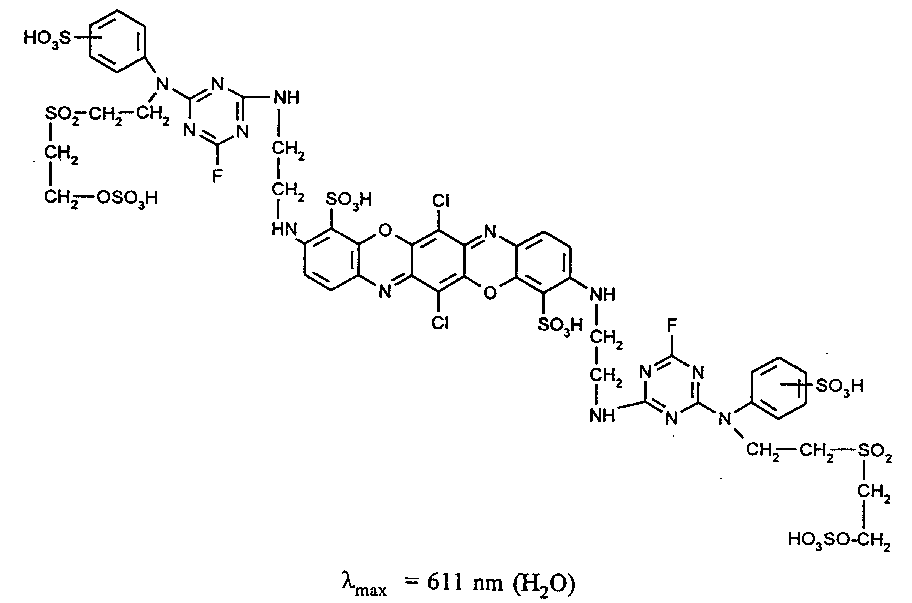

### Beispiel 3

a) 19,8 g einer Verbindung der Formel 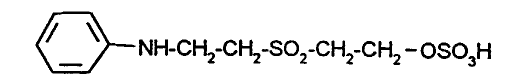 (Herstellung gemäß DE-A-43 04 614, Beispiel 118)
   werden in 40 ml Wasser und 40 g Eis verrührt. Man stellt mit 10 %iger Sodalösung den pH-Wert auf 6,8 und läßt eine Suspension zulaufen, die man aus 12,0 g Cyanurchlorid, 110 ml Wasser und 1,6 ml eines Emulgators bei 0°C hergestellt hat. Während des Zulaufs hält man den pH' Wert des Reaktionsgemisches mit 10 %iger Sodalösung auf 4,2-4,5. Man erhält eine graue Suspension der Reaktivkomponente 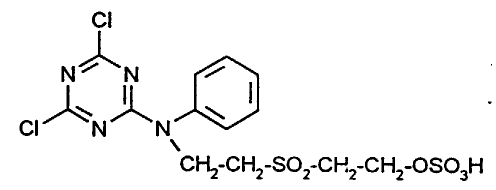
b) 25,2 g Triphendioxazinverbindung aus Beispiel 2b) werden in 400 ml Wasser suspendiert und mit 50 %iger Natronlauge bei pH 11,3 und 20°C gelöst. Man legt 200 ml Wasser und 5 % der obigen Suspension der Reaktivkomponente vor und läßt dann bei 20°C die Lösung der Triphendioxazin-Farbbase und die Suspension der Reaktivkomponente mengenmäßig im Gleichtakt in die Vorlage laufen.
   Man stellt während der Zugabe im Reaktionsgemisch den pH-Wert auf 8,5-9 und hält nach der Zugabe weiter mit 2N Natronlauge auf 8,8, bis die Umsetzung vollständig ist. Der Farbstoff wird mit Natriumchlorid ausgesalzen, abgesaugt, mit 20 %iger Natriumchloridlösung gewaschen und nach Anteigen mit Phosphatpuffer bei 40°C im Vakuum getrocknet. Er entspricht in seinem Hauptanteil der Formel 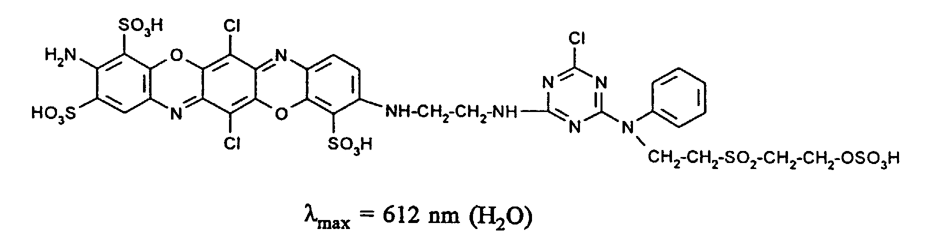 und färbt Baumwolle aus langer Flotte mit guten Fixierausbeuten in neutralen Blautönen.

### Beispiel 4

Einen ähnlichen Farbstoff der Formel 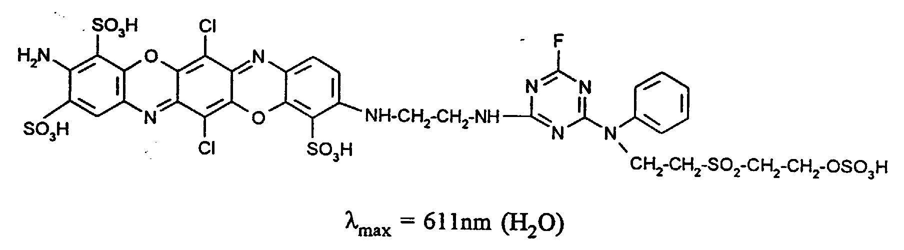 erhält man, wenn man 39,8 g Triphendioxazinkomponente des Beispiels 2 wie beschrieben löst und an Stelle der dortigen Umsetzung wie folgt weiter verfährt:
0,11 Mole der Verbindung der Formel 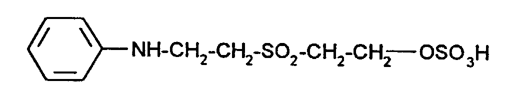 werden in 70 ml Wasser und 70 g Eis verrührt und neutral gelöst. Innerhalb von 5 Minuten tropft man bei 0 bis 3°C 0,12 Mole Cyanurfluorid zu und hält den pH-Wert mit verdünnter Sodalösung auf 4,0-4,5. Die erhaltene Lösung der Verbindung 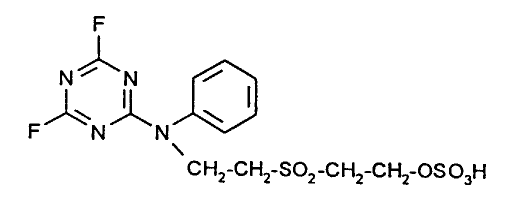 wird in der in Beispiel 2d) aufgezeigten Weise mit der Triphendioxazin-Farbbase umgesetzt.

### Beispiel 5

35,8 g Triphendioxazin-Farbbasenmischung der Formeln A+B, 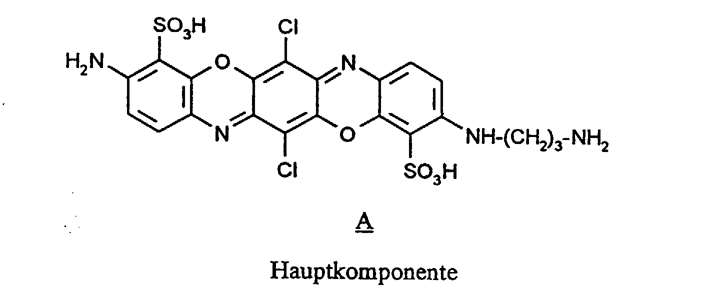 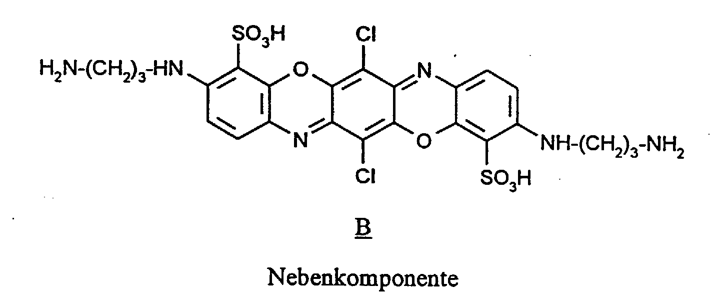 hergestellt durch Kondensation von 66,2 g 4-(3-Amino-1-propylamino)-3-sulfoanilin und 50,8 g 2,5-Diaminobenzolsulfonsäure mit 66,4 g Chloranil und anschließendem oxidativen Ringschluß des Anilgemisches in der in Beispiel 1a) und 1b) gezeigten Weise, werden mit Reaktivkomponente des Beispiels 1c) der Formel 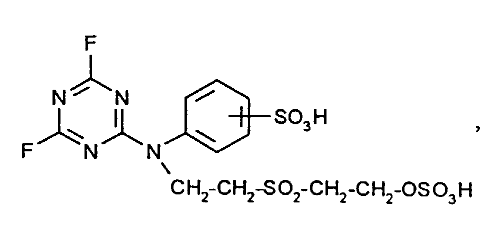 hergestellt aus 46,7 g Aminkomponente und 11,6 ml Cyanurfluorid, nach der Lehre des Beispiels 1d) zu einem Farbstoff kondensiert, dessen Hauptkomponente der Formel 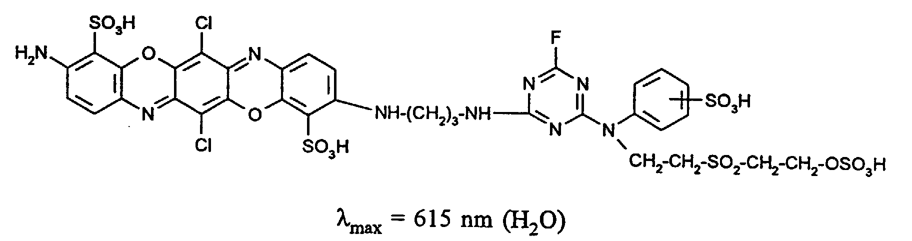 entspricht, begleitet von symmetrischen, aus der obigen Formel B entstandenen Reaktivfarbstoffanteilen.

Der Farbstoff zeigt hinsichtlich Fixierausbeute, Aufbau und Echtheiten ähnliche Eigenschaften wie der des Beispiels 1d).

Weitere, den Beispielen 1 bis 5 ähnliche Farbstoffe erhält man, wenn man die in der Tabelle 1 aufgeführten Triphendioxazin-Farbbasen, Trihalogentriazine und N-(Sulfatoethylsulfonylalkyl)-aniline nach den aufgezeigten Verfahren kondensiert.

Dabei sind die Triphendioxazin-Farbbasen durch die Formel ihres Hauptanteils wiedergegeben.

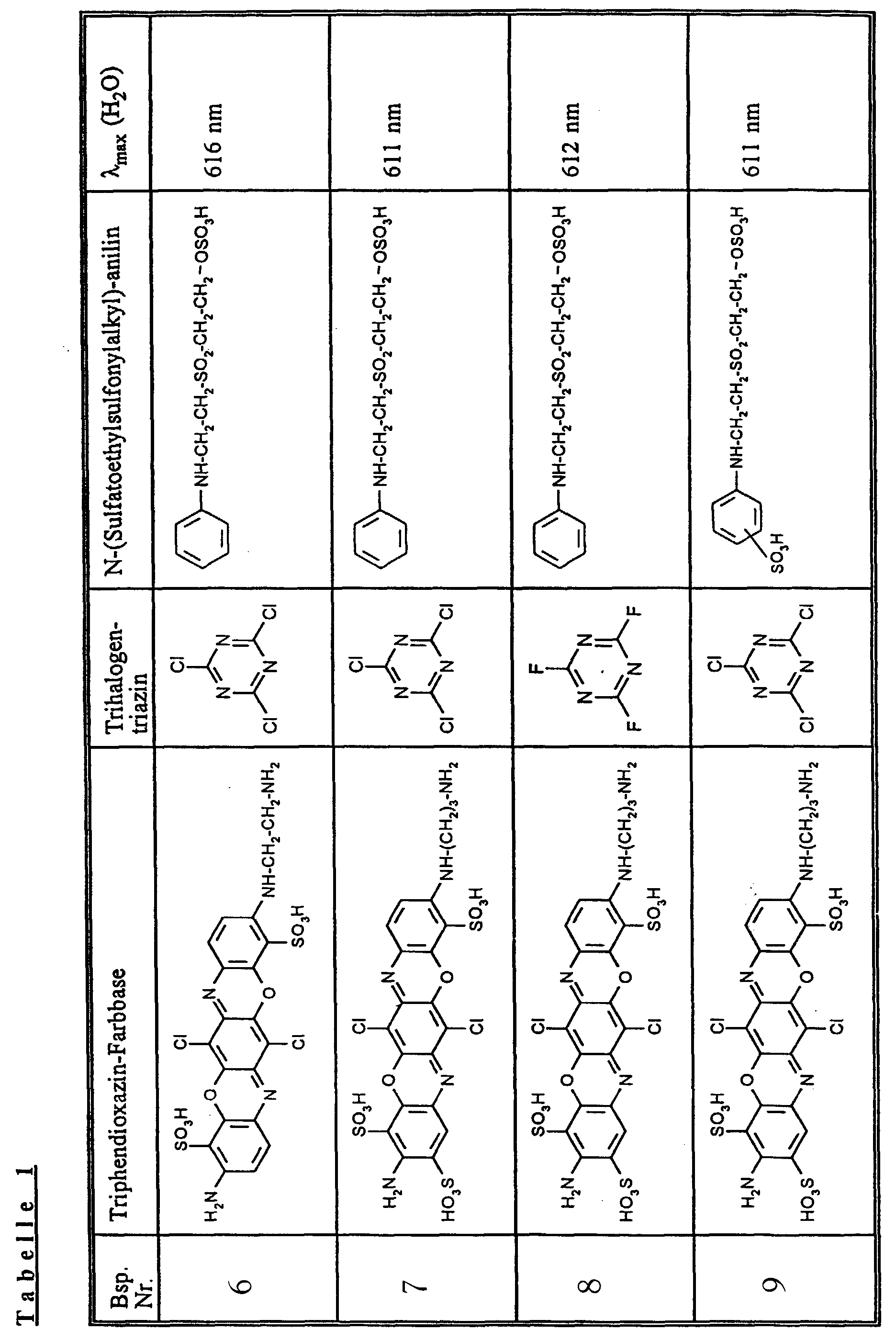

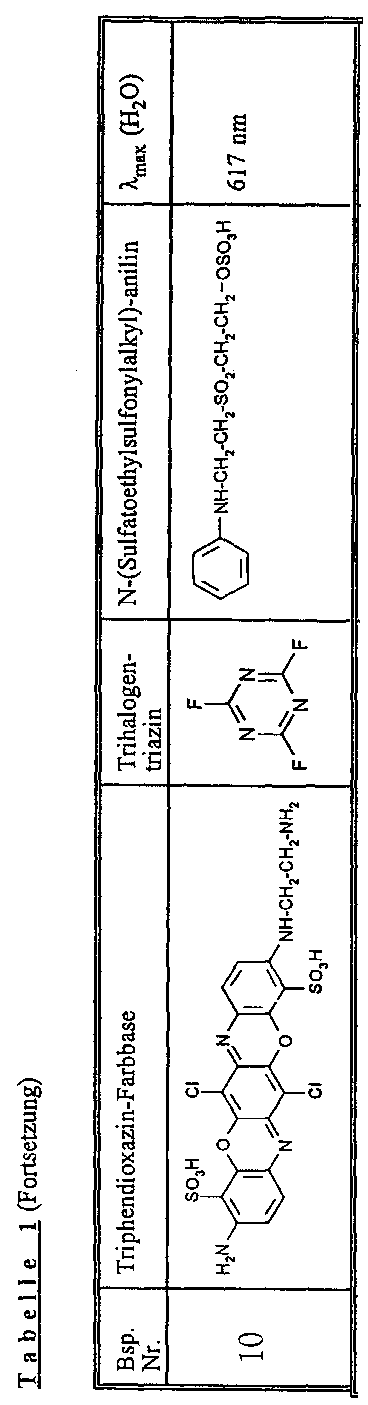

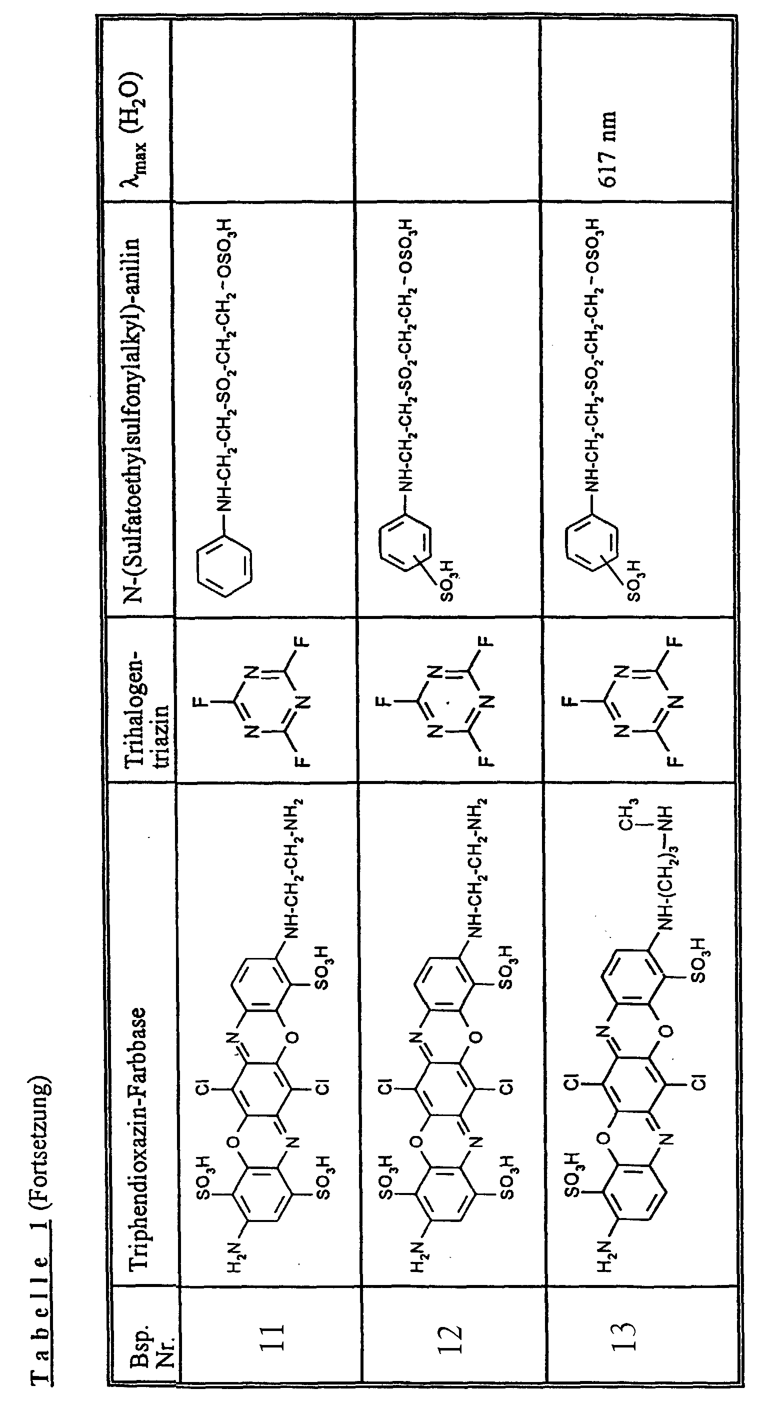

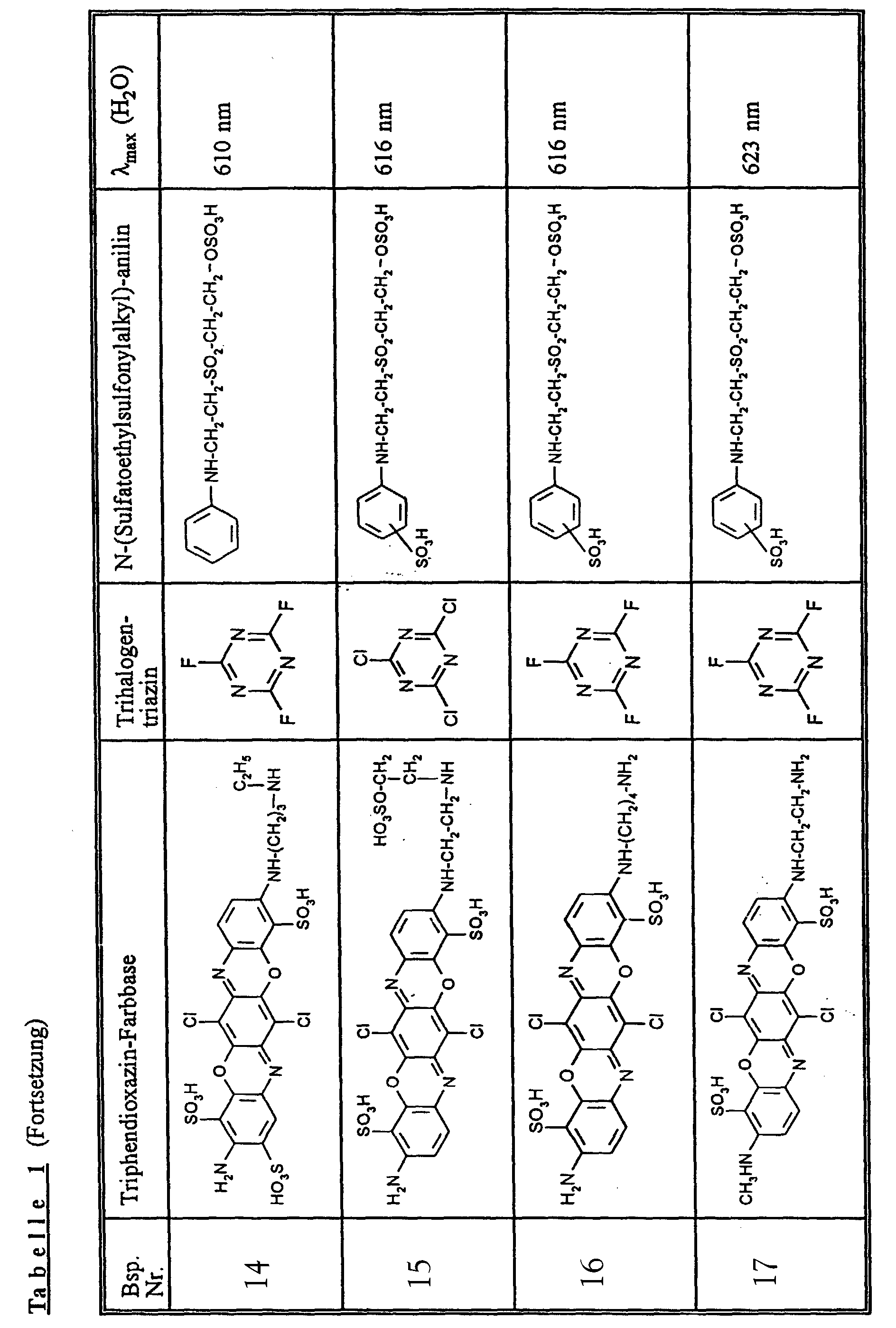

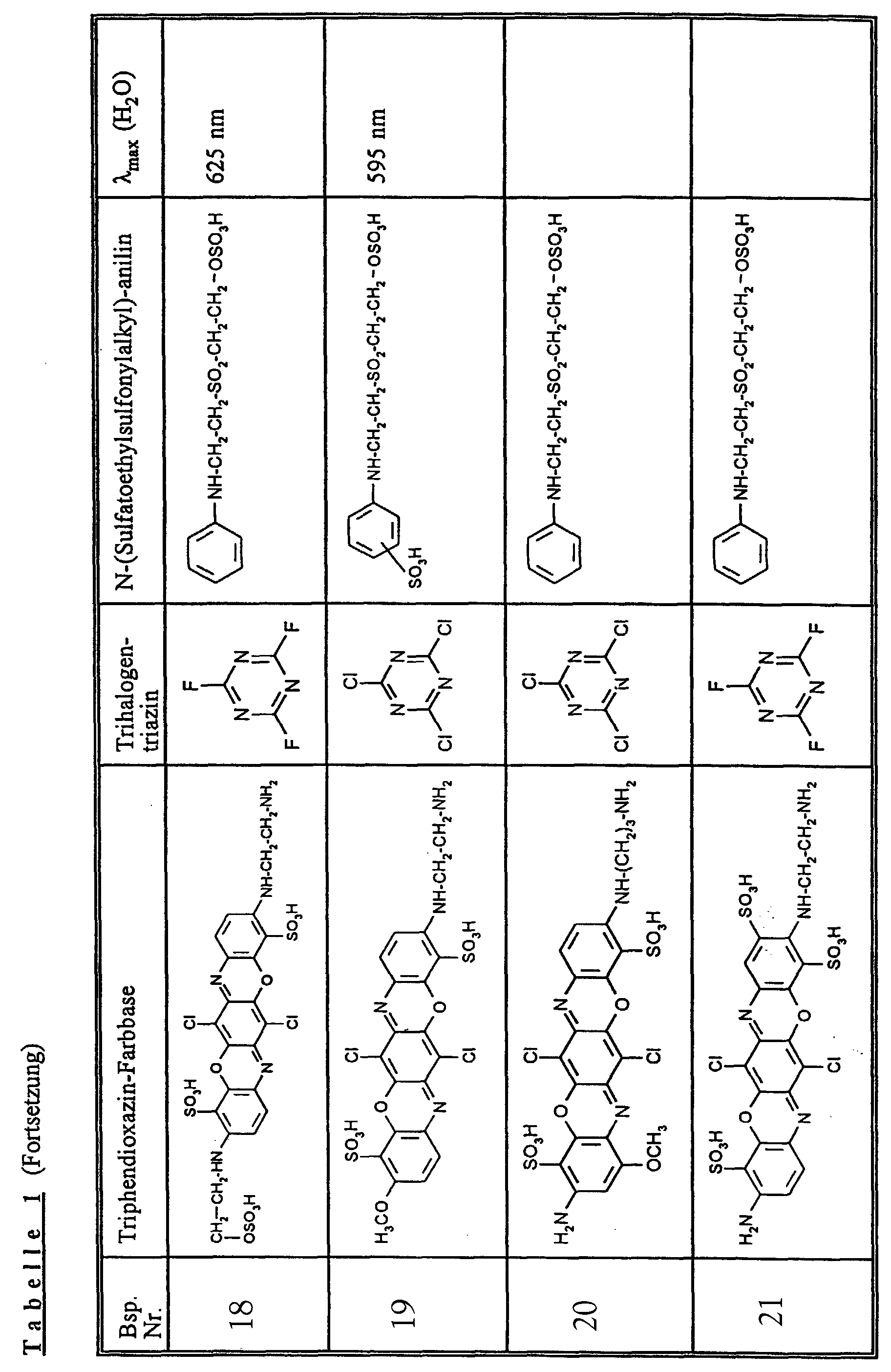

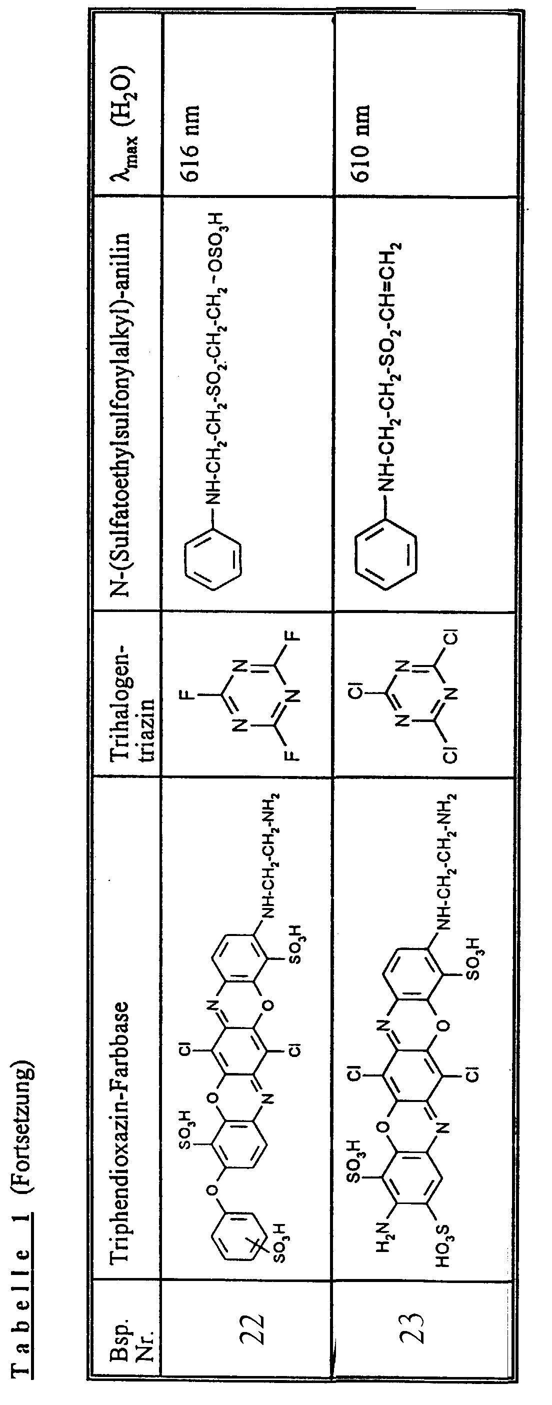

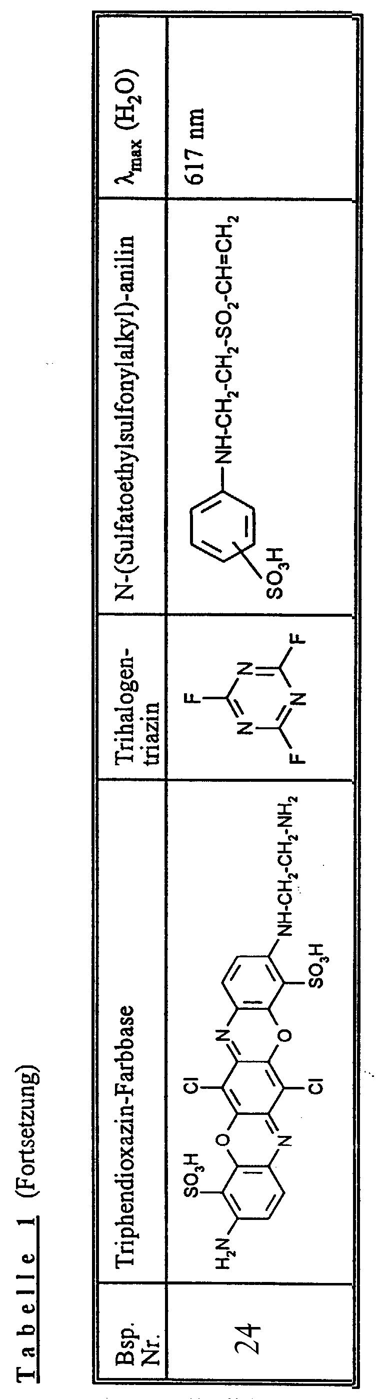

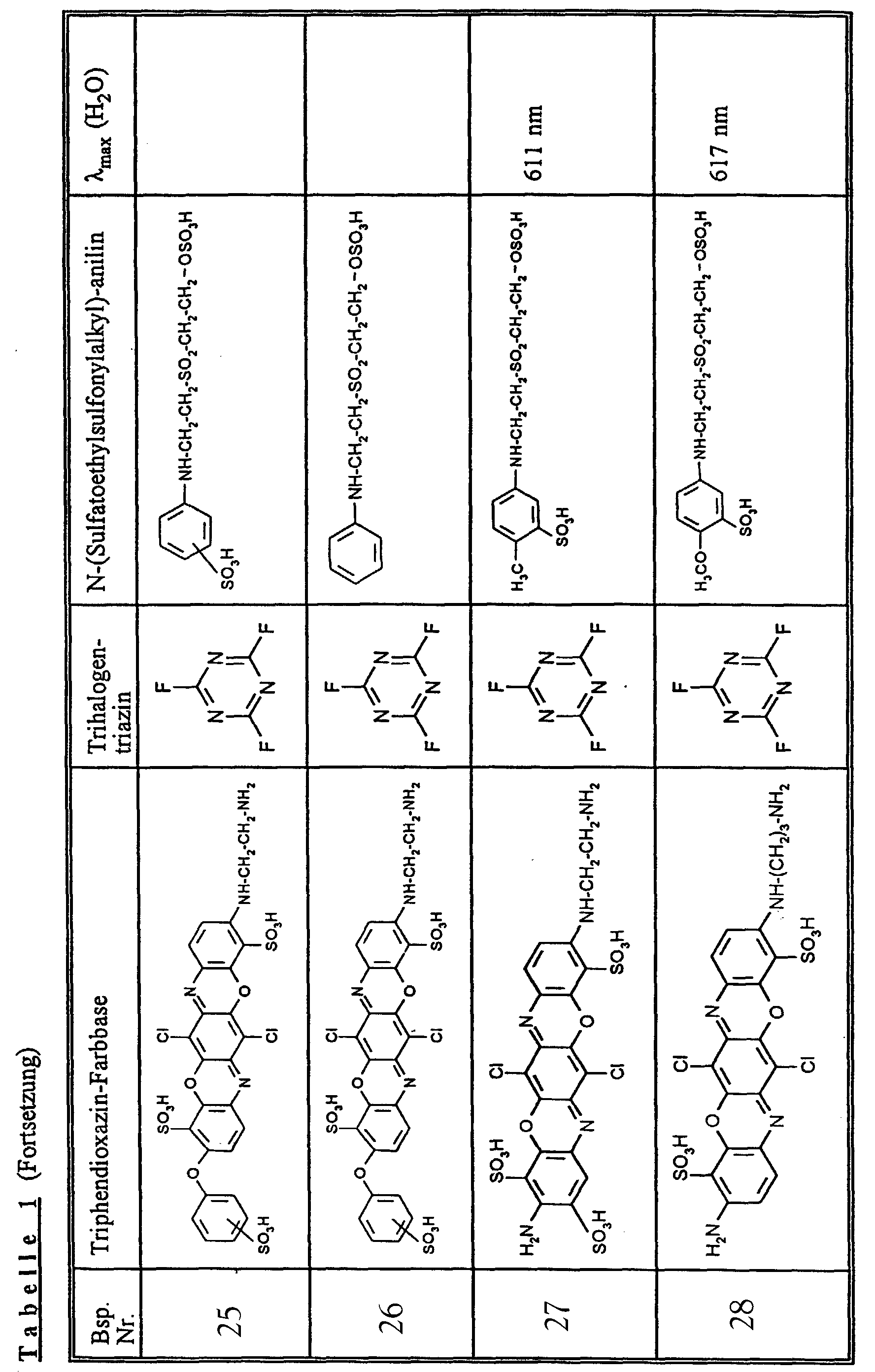

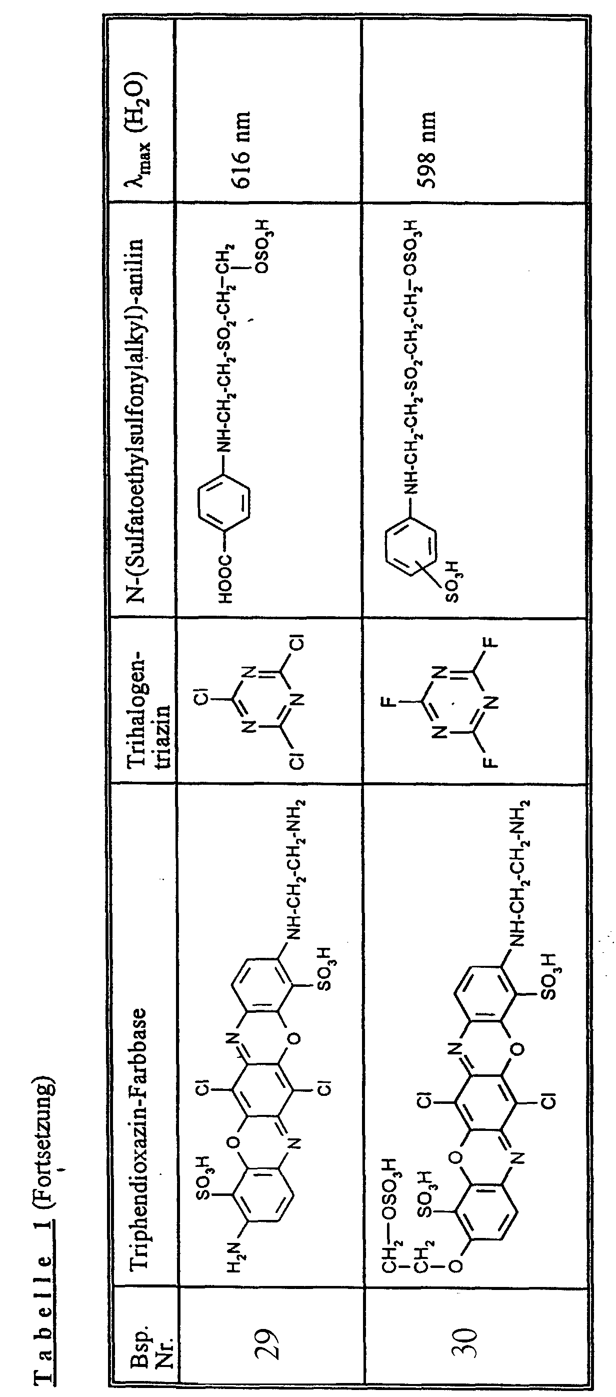

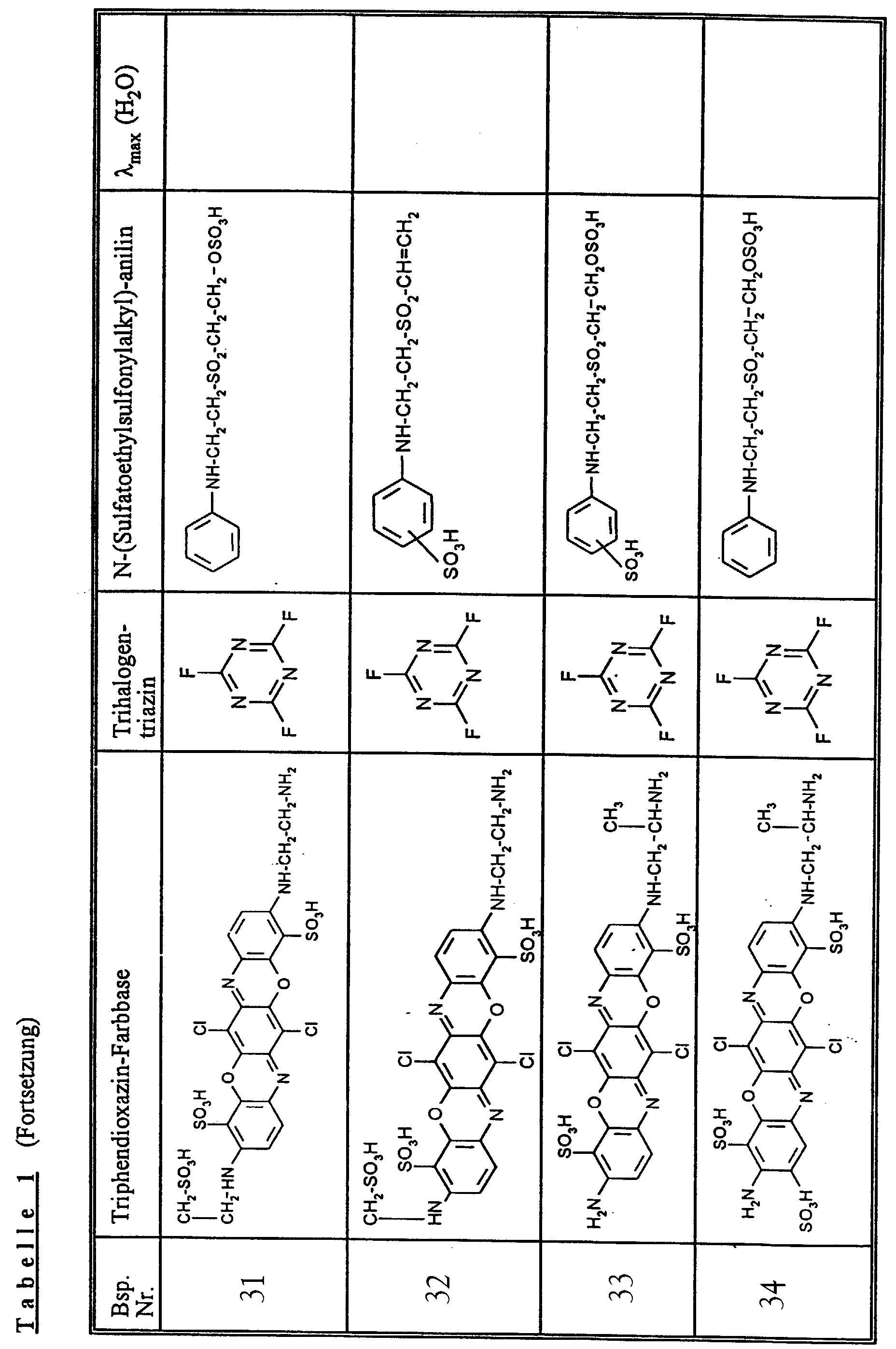

### Beispiel 35

a) Herstellung der Anilkomponente
   50,8 g 4-(β-Aminoethylamino)-3-sulfoanilin und 44,7 g 4-Aminoanisolsulfonsäure werden unter Stickstoff in 1250 ml Wasser und 250 ml Isopropanol bei pH 6,0 gelöst. Man erwärmt auf 50°C, trägt 54,1 g Chloranil ein und hält den pH-Wert auf 6,0. Wenn die Umsetzung beendet ist, läßt man auf Raumtemperatur abkühlen. Das ausgefallene Produkt wird abgesaugt, mit Wasser gewaschen, dann mit 350 ml Aceton abgedeckt und getrocknet. Das erhaltene Anil besteht aus einem Gemisch der drei Substanzen A-C, in dem die Komponenten A und B überwiegen. 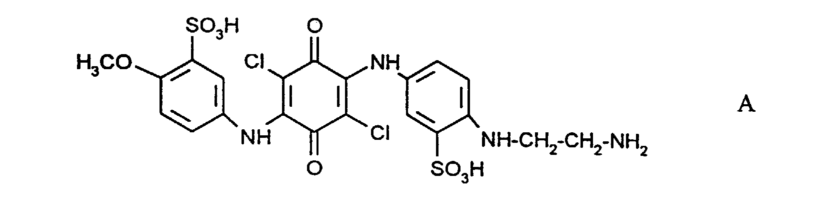 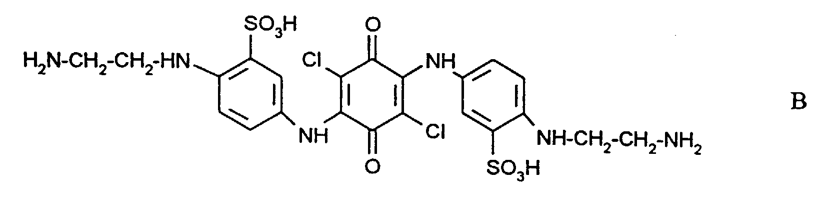 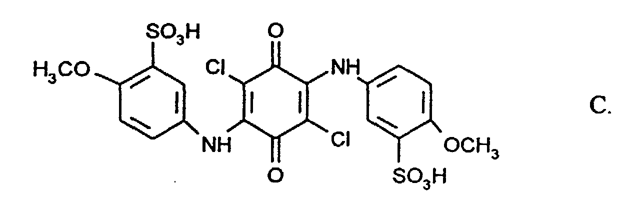
b) Cyclisierung zum Triphendioxazin
   114 g obiges Anil-Gemisch werden in 3 Stunden bei -10 bis +4°C in 285 ml 20 %iges Oleum eingetragen. Man rührt bei 25°C nach, bis vollständige Lösung eingetreten ist. 113 g Kaliumperoxodisulfat werden bei 30°C eingestreut.
   Die erhaltene blaue Lösung wird in Eis/Wasser eingerührt und die erhaltene Suspension ausgesalzen. Der Niederschlag wird abgesaugt und mit 15%iger Kaliumchlorid-Lösung frei von Sulfationen gewaschen. Man erhält nach dem Trocknen im Vakuum bei 60°C 154 g eines salzhaltigen oder nach Abzug des analytisch ermittelten Kaliumchlorids 106,4 g salzfreies Triphendioxazin-Gemisch.
c) Umsetzung zum Reaktivfarbstoff
   50 g Triphendioxazin-Gemisch (berechnet auf salzfreie Substanz) werden in 1000 ml Wasser suspendiert und mit Natronlauge bei pH 11-12 gelöst.
   Aus 51,0 g Verbindung der Formel 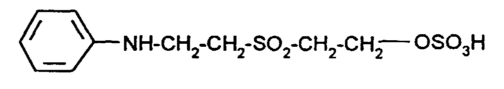 in 100 ml Wasser und 100 g Eis wird durch Eintropfen von 15,9 ml Cyanurfluorid bei 0-3°C und pH 4,0-4,5 entsprechend den Angaben des Beispiels 4 die Reaktivkomponente der Formel 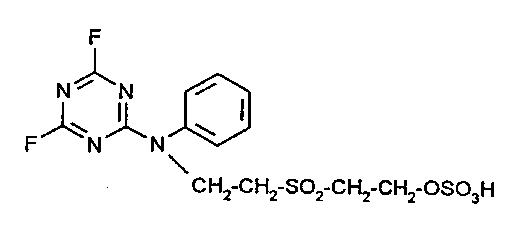 hergestellt.
   5 % der Reaktivkomponente werden in Eis-Wasser vorgelegt. Die Lösung der Triphendioxazinkomponente und die Reaktivkomponente werden synchron eingetragen. Man hält währenddessen und danach den pH-Wert im Reaktionsgemisch auf 8,6-8,8, die Temperatur auf 0-3°C. Nach beendeter Umsetzung erhöht man die Temperatur für 2 Stunden auf 20°C und salzt aus der blauen Lösung den Farbstoff aus, wäscht mit Salzlösung und trocknet ihn nach Pufferung mit Phosphat bei 45°C im Vakuum.
   Der Farbstoff besteht aus einer Mischung der aus dem unsymmetrischen Anil A und dem symmetrischen Anil B hervorgegangenen Anteile, in welcher der Farbstoff der Formel 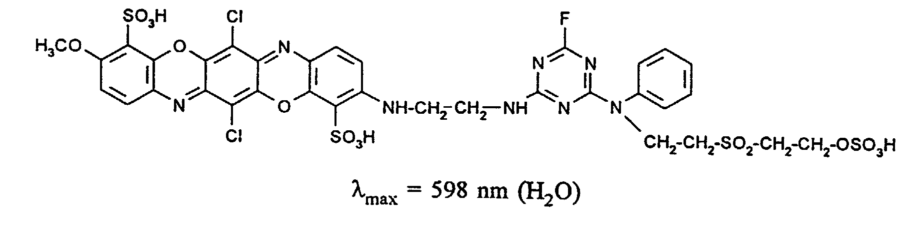 überwiegt.
   Der Farbstoff färbt Cellulosefasem in rotstichig blauen Tönen mit ausgezeichneten Echtheiten und guter Fixierausbeute.

### Beispiel 36

50,0 g Triphendioxazin-Gemisch des Beispiels 35b) 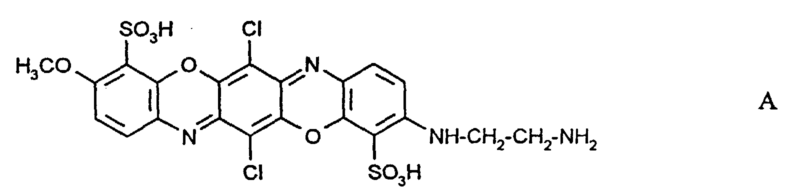 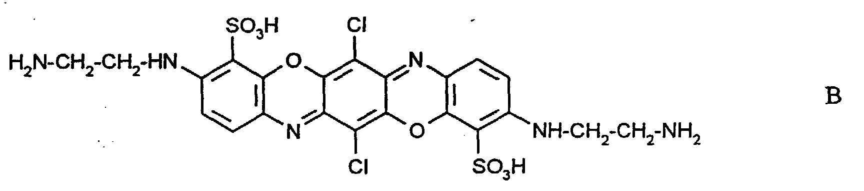 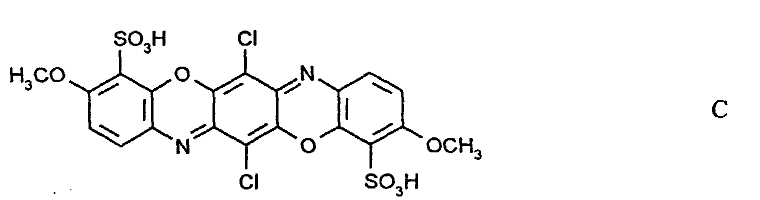 werden in 1000 ml Wasser bei pH 11,5 gelöst. Man läßt diese Lösung in der in Beispiel 35c) gezeigten Weise mit der Lösung einer Reaktivkomponente reagieren, die man nach der Verfahrensweise des Beispiels 1 c) aus 64,2 g 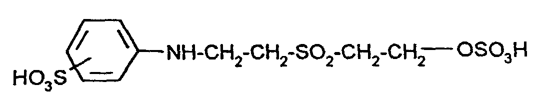 und 15,9 ml Cyanurfluorid in Gegenwart von 5,1 g Natriumfluorid hergestellt hat.

Die Aufarbeitung der erhaltenen rotstichig blauen Lösung durch Aussalzen, Absaugen und Trocknen in Gegenwart von Puffern ergibt außer dem aus dem Triphendioxazin-Basen-Anteil B hervorgegangenen symmetrischen Reaktivfarbstoffanteil ein Produkt der Formel

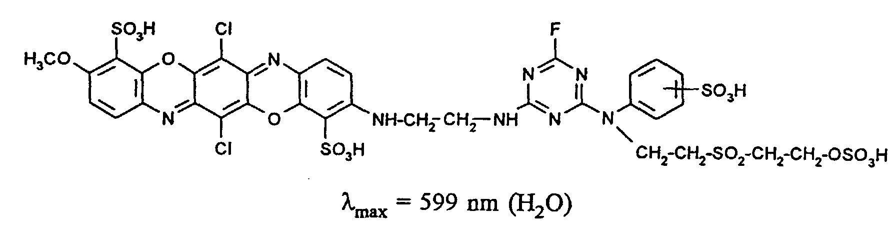

Das Farbstoffgemisch färbt Baumwolle in rotstichig blauen Tönen mit ausgezeichneten Echtheiten und guter Fixierausbeute.

## Patentansprüche

1. Reaktivfarbstoff der Formel 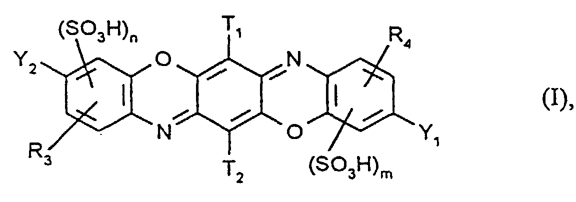 worin
Y₁ = ein Rest der Formel 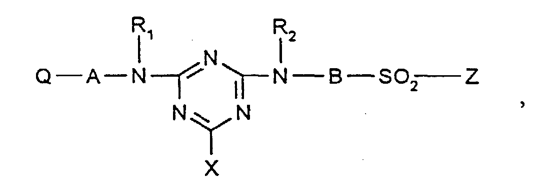
worin
A= C₂-C₆-Alkylen, gegebenenfalls substituiert durch OH, OSO₃H oder unterbrochen durch Heteroatome, Arylen, gegebenenfalls substituiert durch SO₃H, COOH, C₁-C₂-Alkyl, C₁-C₂-Alkoxy,
B = -CH₂-CH₂-
R₁ = H, C₁-C₄-Alkyl, gegebenenfalls substituiert durch OH, OSO₃H, COOH, CONH₂, SO₃H,
R₂ = Phenyl, gegebenenfalls substituiert durch SO₃H, COOH, C₁-C₂-Alkyl, C₁-C₂-Alkoxy,
Q = 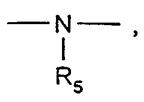 -O-,
worin
R₅ = H, C₁-C₄-Alkyl oder mit R₁ zu einem Ring verknüpft ist,
X = F, Cl,
Z = -CH=CH₂ oder -CH₂-CH₂-OSO₃H,
Y₂ = Amino; C₁-C₄-Alkylamino, gegebenenfalls substituiert durch OH, OSO₃H, SO₃H, COOH, CONH₂, C₁-C₂-Alkoxy; C₁-C₄-Alkoxy, gegebenenfalls substituiert durch OH, OSO₃H, C₁-C₂-Alkoxy oder unterbrochen durch Heteroatome; Aroxy, gegebenenfalls substituiert durch SO₃H, C₁-C₂-Alkyl, C₁-C₂-Alkoxy.
m = 1 oder 2,
n = 1 oder 2,
T₁, T₂ = unabhängig voneinander H, Cl, Br, C₁-C₄-Alkoxy, C₁-C₄-Alkyl, gegebenenfalls substituiertes Phenoxy oder Phenyl,
R₃, R₄ = unabhängig voneinander H, C₁-C₂-Alkyl, C₁-C₂-Alkoxy, Carboxy, Halogen (Cl, Br).

2. Reaktivfarbstoff gemäß Anspruch 1, dadurch gekennzeichnet, daß
A = Ethylen, 1,3-Propylen, 1,2-Propylen, 2-Hydroxy-1,3-propylen, 2-Sulfato-1,3-propylen, 1,4-, 1,3-, 2,3-Butylen, 1,5-Pentylen, 1,6- und 2,5-Hexylen, 1,4- oder 1,3-Cyclohexylen, -(CH₂-CH₂-O)ₙ-CH₂-CH₂- mit n = 1 oder 2, -CH₂-CH₂-S-CH₂-CH₂- oder

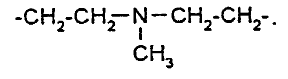

3. Reaktivfarbstoff gemäß Anspruch 1, dadurch gekennzeichnet, daß
A = 1,2-, 1,3- und 1,4-Phenylen, 4-Sulfo-1,3-phenylen, 6-Sulfo-1,3-phenylen, 2- oder 3-Sulfo-1,4-phenylen, 4,6-Disulfo-1,3-phenylen, 2- oder 3-Methyl-1,4-phenylen, 4- oder 6-Methyl-1,3-phenylen, 5-Methyl-1,2-phenylen, 3-Chlor-1,4-phenylen, 4-Chlor-1,3-phenylen, 4-Chlor-1,2-phenylen oder entsprechende durch Sulfogruppen substituierte Methyl- und Chlorphenylenreste.

4. Reaktivfarbstoff gemäß wenigstens einem der vorhergehenden Ansprüche, dadurch gekennzeichnet, daß
R₁ = Wasserstoff oder Methyl, Ethyl, 1-Propyl, 2-Hydroxyethyl, 2-Sulfatoethyl, 2-Sulfoethyl, 2-Carboxyethyl, 2-Aminocarbonylethyl, 2-Carboxy-1-propyl,
R₂ = Phenyl, 2-, 3-, 4-Sulfophenyl, 2-, 3-, 4-Methylphenyl, 2-, 3-, 4-Methoxy- oder -Ethoxyphenyl sowie die entsprechenden durch Sulfogruppen substituierten Methyl-, Methoxy- oder Ethoxyphenylreste, 2-, 3-, 4-Carboxyphenyl,
R₅ = Wasserstoff oder Methyl, Ethyl, 2-Hydroxyethyl, 2-Sulfatoethyl, wobei die Reste R₁ und R₅ auch direkt miteinander verknüpft sein können und die Gruppierung 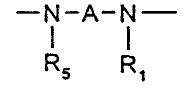 ein Piperidindiyl-Rest sein kann.

5. Reaktivfarbstoff gemäß wenigstens einem der vorhergehenden Ansprüche, dadurch gekennzeichnet, daß
Y₂ = NH₂ oder Methylamino, Ethylamino, 1- oder 2-Propylamino, 1- oder 2-Butylamino, 2-Hydroxyethylamino, 2-Sulfatoethylamino, 2-Sulfoethylamino, 2-Carboxyethylamino, 2-Aminocarbonylethylamino, 2-Methyl-1-propylamino, 2-Hydroxy-1-propylamino, 2-Sulfato-1-propylamino, 2-Carboxy-1-propylamino, 2-Methoxy-ethylamino, 2-Ethoxyethylamino, 2-(2'-Hydroxyethoxy)-ethylamino, 2-(2'-Sulfatoethoxy)-ethylamino.

6. Reaktivfarbstoff gemäß Ansprüchen 1 bis 4, dadurch gekennzeichnet, daß
Y₂ = Phenoxy, 2-, 3-, 4-Sulfophenoxy, 2-, 3-, 4-Kresoxy, 2-, 3-, 4-Methoxyphenoxy, 1- oder 2-Naphthoxy oder ein durch Sulfogruppen substituierter Kresoxy-, Methoxyphenoxy- oder Naphthoxy-Rest oder ein C₁-C₄-Alkoxy-Rest, der substituiert oder unsubstituiert ist.

7. Mischung von Farbstoffen gemäß Anspruch 1, insbesondere Formel (II), 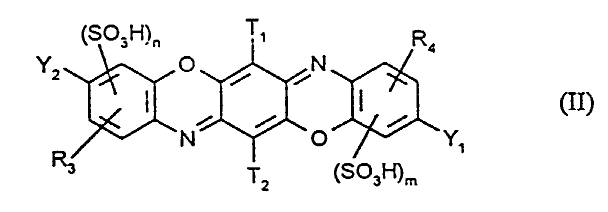 mit Farbstoffen der Formel (III), 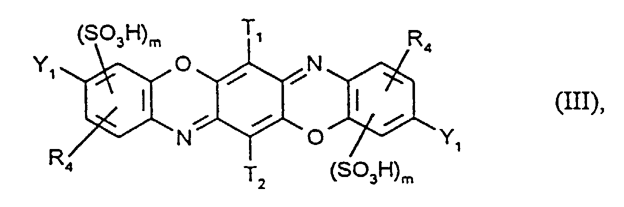 worin
Y₁, Y₂, R₃, R₄, T₁, T₂, m und n die in Anspruch 1 angegebene Bedeutung haben.

8. Verfahren zur Herstellung einer Farbstoff-Mischung gemäß Anspruch 7 durch Umsetzungen entsprechender Farbstoffe (XIII)-(XIV) 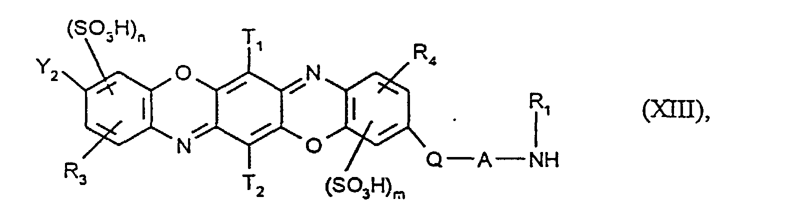 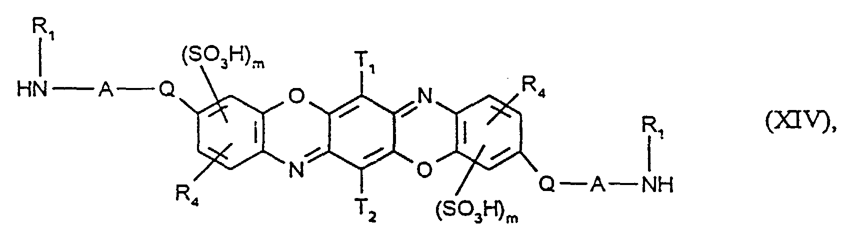 worin
Y₂, R₃, R₄, T₁, T₂, m, n, Q, A und R₁ die in Anspruch 1 angegebene Bedeutung haben,
mit Reaktivkomponenten der Formel 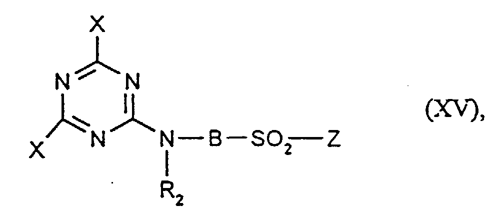 worin
X, R₂, B und Z die in Anspruch 1 angegebene Bedeutung haben oder durch Kondensation von Chromophoren der Formel (XIII)-(XIV) mit den Trihalogentriazinen (XVI) zu Farbstoffen der Formel 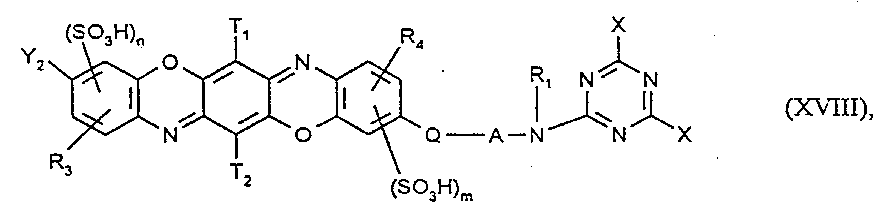 worin
Y₂, R₃, R₄, T₁, T₂, m, n, Q, A, R₁ und X die in Anspruch 1 angegebene Bedeutung haben,
und deren weitere Umsetzung mit molaren Mengen Aminosulfon.

9. Verfahren zum Färben oder Bedrucken von hydroxyl- oder amidgruppenhaltigen Materialien mit einem Reaktivfarbstoff, wobei der Farbstoff gemäß wenigstens einem der vorhergehenden Ansprüche verwendet wird.

10. Gefärbte oder bedruckte Substrate, die wenigstens teilweise mit einem Farbstoff gemäß wenigstens einem der vorhergehenden Ansprüche gefärbt worden sind.

## Claims

1. Rreactive dyestuff of the formula 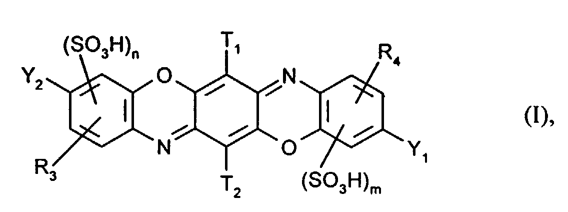 in which
Y₁ = a radical of the formula 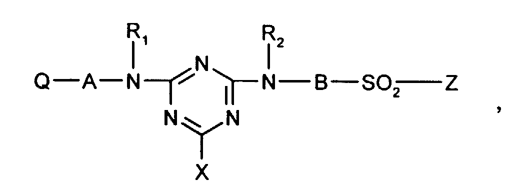
in which
A = C₂-C₆-alkylene, optionally substituted by OH or DSO₃H or interrupted by heteroatoms, or arylene, optionally substituted by SO₃H, COOH, C₁-C₂-alkyl or C₁-C₂-alkoxy,
B = -CH₂-CH₂-,
R₁ = H or C₁-C₄-alkyl, optionally substituted by OH, OSO₃H, COOH, CONH₂ or SO₃H,
R₂ = phenyl, optionally substituted by SO₃H, COOH, C₁-C₂-alkyl or C₁-C₂-alkoxy,
Q = 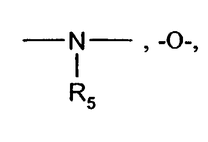
in which
R₅ = H or C₁-C₄-alkyl, or is linked to R₁ to form a ring,
X = F or Cl,
Z = -CH=CH₂ or -CH₂-CH₂-OSO₃H,
Y₂ = amino; C₁-C₄-alkylamino, optionally substituted by OH, OSO₃H, SO₃H, COOH, CONH₂ or C₁-C₂-alkoxy; C₁-C₄-alkoxy, optionally substituted by OH, OSO₃H or C₁-C₂-alkoxy or interrupted by heteroatoms; or aroxy, optionally substituted by SO₃H, C₁-C₂-alkyl or C₁-C₂-alkoxy,
m = 1 or 2,
n = 1 or 2,
T₁ and T₂ = independently of one another H, Cl, Br, C₁-C₄-alkoxy, C₁-C₄-alkyl or optionally substituted phenoxy or phenyl,
R₃ and R₄ = independently of one another H, C₁-C₂-alkyl, C₁-C₂-alkoxy, carboxyl or halogen (Cl or Br).

2. Reactive dyestuff according to Claim 1, characterized in that
A = ethylene, 1,3-propylene, 1,2-propylene, 2-hydroxy-1,3-propylene 2-sulphato-1,3-propylene, 1,4-, 1,3- and 2,3-butylene, 1,5-pentylene, 1,6- and 2,5-hexylene, 1,4- or 1,3-cyclohexylene, -(CH₂-CH₂-O)ₙ-CH₂-CH₂- where n = 1 or 2, -CH₂-CH₂-S-CH₂-CH₂- or

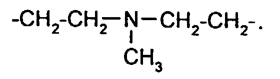

3. Reactive dyestuff according to Claim 1, characterized in that
A = 1,2-, 1,3- and 1,4-phenylene, 4-sulpho-1,3-phenylene, 6-sulpho-1,3-phenylene, 2- or 3-sulpho-1,4-phenylene, 4,6-disulpho-1,3-phenylene, 2- or 3-methyl-1,4-phenylene, 4- or 6-methyl-1,3-phenylene, 5-methyl-1,2-phenylene, 3-chloro-1,4-phenylene, 4-chloro-1,3-phenylene or 4-chloro-1,2-phenylene or corresponding methyl- and chlorophenylene radicals substituted by sulpho groups.

4. Reactive dyestuff according to at least one of the preceding claims, characterized in that
R₁ = hydrogen or methyl, ethyl, 1-propyl, 2-hydroxyethyl, 2-sulphatoethyl, 2-sulphoethyl, 2-carboxyethyl, 2-aminocarbonylethyl or 2-carboxy-1-propyl,
R₂ = phenyl, 2-, 3-, 4-sulphophenyl, 2-, 3-, 4-methylphenyl, 2-, 3-, 4-methoxy- or -ethoxyphenyl and the corresponding methyl-, methoxy- or ethoxyphenyl radicals substituted by sulpho groups, and 2-, 3- and 4-carboxyphenyl,
R₅ = hydrogen or methyl, ethyl, 2-hydroxyethyl or 2-sulphatoethyl, and in which the radicals R₁ and R₅ can also be linked directly to one another, and the grouping 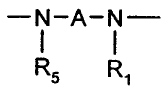 can be a piperidinediyl radical.

5. Reactive dyestuff according to at least one of the preceding claims, characterized in that
Y₂ = NH₂ or methylamino, ethylamino, 1- or 2-propylamino, 1- or 2-butylamino, 2-hydroxyethylamino, 2-sulphatoethylamino, 2-sulphoethylamino, 2-carboxyethylamino, 2-aminocarbonylethylamino, 2-methyl-1-propylamino, 2-hydroxy-1-propylamino, 2-sulphato-1-propylamino, 2-carboxy-1-propylamino, 2-methoxyethylamino, 2-ethoxyethylamino, 2-(2'-hydroxyethoxy)-ethylamino or 2-(2'-sulphatoethoxy)-ethylamino.

6. Reactive dyestuff according to Claims 1 to 4, characterized in that
Y₂ = phenoxy, 2-, 3- or 4-sulphophenoxy, 2-, 3- or 4-cresoxy, 2-, 3- or 4-methoxyphenoxy, 1- or 2-naphthoxy or a cresoxy, methoxyphenoxy or naphthoxy radical substituted by sulpho groups, or, a C₁-C₄-alkoxy radical, which is substituted or unsubstituted.

7. Mixture of dyestuffs according to Claim 1, in particular of the formula (II) 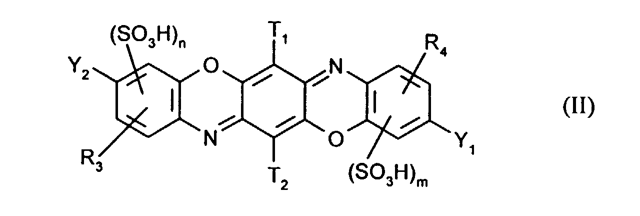 with dyestuffs of the formula (III) 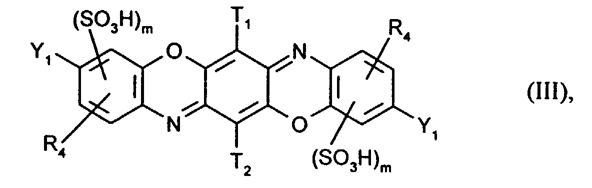 in which
Y₁, Y₂, R₃, R₄, T₁, T₂, m and n have the meaning given in Claim 1.

8. Process for the preparation of a dyestuff mixture according to Claim 7, by reactions of corresponding dyestuffs (XIII)-(XIV) 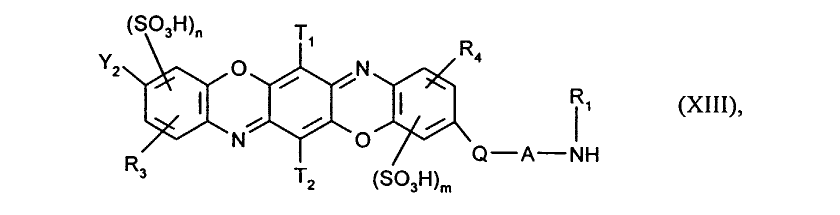 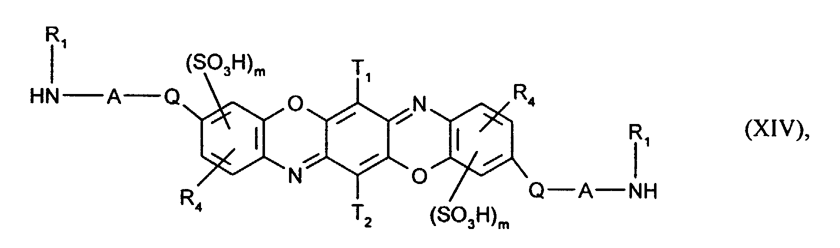 in which
Y₂, R₃, R₄, T₁, T₂, m, n, Q, A and R, have the meaning given in Claim 1,
with reactive components of the formula 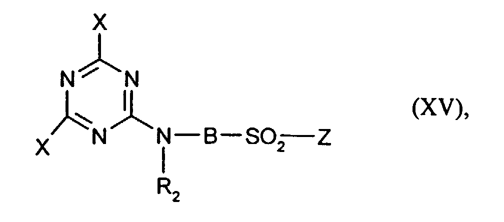 in which
X, R₂, B and Z have the meaning given in Claim 1, or by condensation of chromophores of the formula (XIII)-(XIV) with the trihalogenotriazines (XVI) to give dyestuffs of the formula 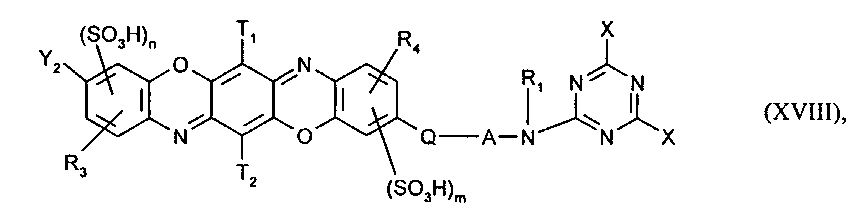 in which
Y₂, R₃, R₄, T₁, T₂, m, n, Q, A, R, and X have the meaning given in Claim 1,
and further reaction thereof with molar amounts of aminosulphone.

9. Process for dyeing or printing materials containing hydroxyl or amide groups with a reactive dyestuff, in which the dyestuff according to at least one of the preceding Claims is used.

10. Dyed or printed substrate which has been dyed at least partly with a dyestuff according to at least one of the preceding Claims.

## Revendications

1. Colorant réactif de formule 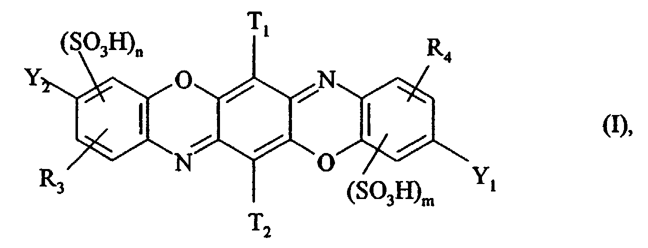 dans laquelle
Y₁ = un groupe de formule 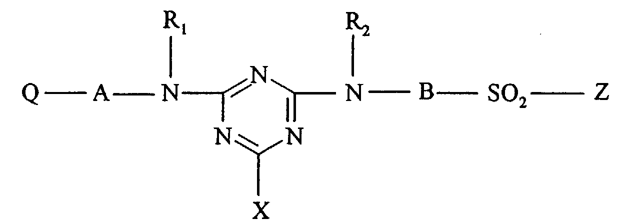
dans laquelle
A= alkylène en C₂-C₆ éventuellement substitué par OH, OSO₃H, ou interrompu par des hétéroatomes, arylène éventuellement substitué par SO₃H, COOH, alkyle en C₁-C₂, alcoxy en C₁-C₂,
B = -CH₂CH₂-,
R₁ = H, alkyle en C₁-C₄ éventuellement substitué par OH, OSO₃H, COOH, CONH₂, SO₃H,
R₂ = phényle éventuellement substitué par SO₃H, COOH, alkyle en C₁-C₂, alcoxy en C₁-C₂,
Q = 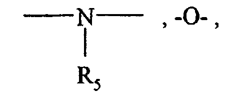
avec
R₅ = H, alkyle en C₁-C₄, ou bien R₅ et R₁ sont reliés avec formation d'un cycle,
X = F, Cl,
Z = -CH = CH₂ ou -CH₂-CH₂-OSO₃H,
Y₂ = amino ; alkylamino en C₁-C₄ éventuellement substitué par OH, OSO₃H, SO₃H, COOH, CONH₂, alcoxy en C₁-C₂ ; alcoxy en C₁-C₄ éventuellement substitué par OH, OSO₃H, alcoxy en C₁-C₂ ou interrompu par des hétéroatomes ; aroxy éventuellement substitué par SO₃H, alkyle en C₁-C₂, alcoxy en C₁-C₂ ;
m = 1 ou 2,
n = 1 ou 2,
T₁, T₂ = indépendamment l'un de l'autre H, Cl, Br, alcoxy en C₁-C₄, alkyle en C₁-C₄ ; phénoxy ou phényle éventuellement substitué,
R₃, R₄ = indépendamment l'un de l'autre H, alkyle en C₁-C₂, alcoxy en C₁-C₂, carboxy, halogène (Cl, Br).

2. Colorant réactif selon la revendication 1, caractérisé en ce que
A = éthylène, 1,3-propylène, 1,2-propylène, 2-hydroxy-1,3-propylène, 2-sulfato-1,3-propylène, 1,4-, 1,3-, 2,3-butylène, 1,5-pentylène, 1,6- et 2,5-hexylène, 1,4- ou 1,3-cyclohexylène, -(CH₂-CH₂-O)ₙ-CH₂-CH₂- avec n = 1 ou 2, -CH₂-CH₂-S-CH₂-CH₂-, ou

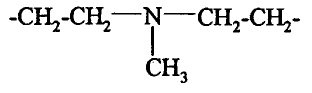

3. Colorant réactif selon la revendication 1, caractérisé en ce que
A = 1,2-, 1,3- et 1,4-phénylène, 4-sulfo-1,3-phénylène, 6-sulfo-1,3-phénylène, 2- ou 3-sulfo-1,4-phénylène, 4,6-disulfo-1,3-phénylène, 2-ou 3-méthyl-1,4-phénylène, 4- ou 6-méthyl-1,3-phénylène, 5-méthyl-1,2-phénylène, 3-chlore-1,4-phénylène, 4-chlore-1,3-phénylène, 4-chloro-1,2-phénylène ou groupes méthyl- et chloro-phénylène correspondants substitués par des groupes sulfo.

4. Colorant réactif selon au moins une des revendications qui précèdent, caractérisé en ce que
R₁ = hydrogène ou méthyle, éthyle, 1-propyle, 2-hydroxyéthyle, 2-sulfato-éthyle, 2-sulfoéthyle, 2-carboxyéthyle, 2-aminocarbonyléthyle, 2-carboxy-1-propyle,
R₂ = phényle, 2-, 3-, 4-sulfophényle, 2-, 3-, 4-méthylphényle, 2-, 3-, 4-méthoxy- ou -éthoxy-phényle et groupes méthyl-, méthoxy- ou éthoxy-phényle correspondants substitués par des groupes sulfo, 2-, 3-, 4-carboxy-phényle,
R₅ = hydrogène ou méthyle, éthyle, 2-hydroxyéthyle, 2-sulfatoéthyle.
les groupes R₁ et R₅ pouvant également être reliés directement entre eux, le groupement 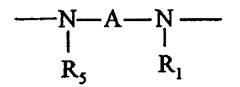 pouvant consister en un groupe pypéridinediyle.

5. Colorant réactif selon au moins une des revendications qui précédent caractérisé en ce que
Y₂ = NH₂ ou méthylamino, éthylamino, 1- ou 2-propylamino, 1- ou 2-butylamino, 2-hydroxyéthylamino, 2-sulfatoéthylamino, 2-sulfoéthylamino, 2-carboxyéthylamino, 2-aminocarbonyléthylamino, 2-méthyl-1-propylamino, 2-hydroxy-1-propylamino, 2-sulfato-1-propylamino, 2-carboxy-1-propylamino, 2-méthoxyéthylamino, 2-éthoxyéthylamino, 2-(2'-hydroxyéthoxy)-éthylamino, 2-(2'-sulfatoéthoxy)-éthylamino.

6. Colorant réactif selon les revendications 1 à 4, caractérisé en ce que
Y₂ = phénoxy, 2-, 3-, 4-sulfophénoxy, 2-, 3-, 4-crésoxy, 2-, 3-, 4-méthoxyphénoxy, 1- ou 2-naphtoxy ou un groupe crésoxy, méthoxy, phénoxy ou naphtoxy substitué par des groupes sulfo, ou un groupe alcoxy en C₁-C₄ substitué ou non.

7. Mélange de colorants selon la revendication 1, répondant en particulier à la formule (II) 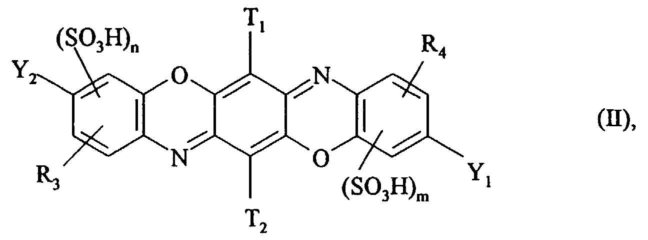 et de colorants de formule (III) 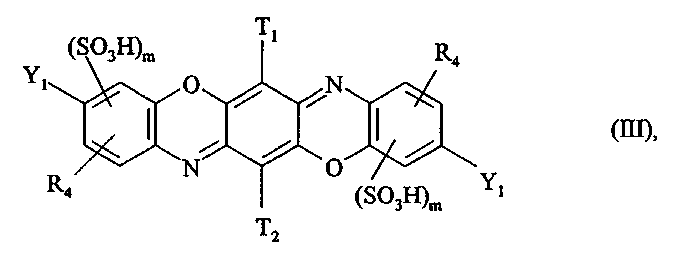 dans lesquelles
Y₁, Y₂, R₃, R₄, T₁, T₂, m et n ont les significations indiquées dans la revendication 1.

8. Procédé de préparation d'un mélange de colorants selon la revendication 7 par réaction des colorants correspondants (XIII)-(XIV) 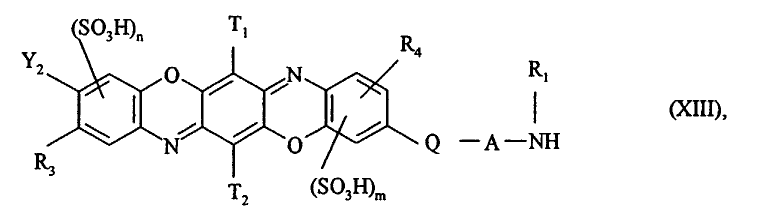 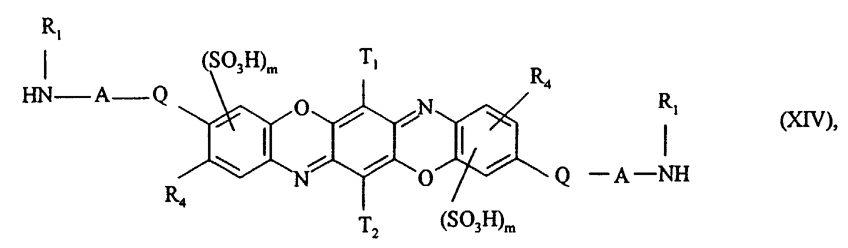 dans lesquelles
Y₂, R₃, R₄, T₁, T₂, m, n, Q, A et R₁ ont les significations indiquées dans la revendication 1,
avec des composants réactifs de formule 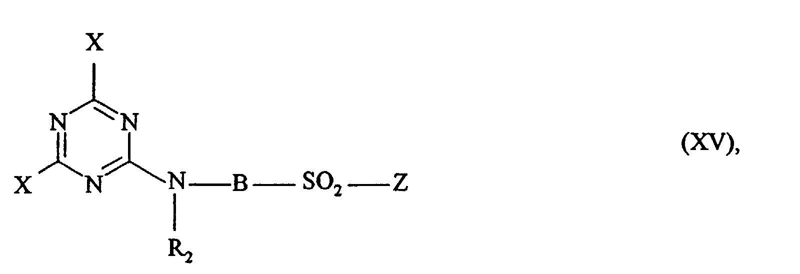 dans laquelle
X, R₂, B et Z ont les significations indiquées dans la revendication 1, ou par condensation de chromophores de formule (XIII)-(XIV) avec les trihalogénotriazines (XVI), donnant des colorants de formule 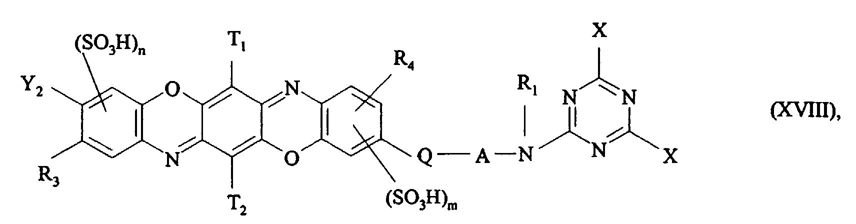 dans laquelle
Y₂, R₃, R₄, T₁, T₂, m, n, Q, A, R₁ et X ont les significations indiquées dans la revendication 1,
qu'on fait ensuite réagir avec des proportions molaires d'une aminosulfone.

9. Procédé pour la teinture ou l'impression de matières contenant des groupes hydroxyle ou amide à l'aide d'un colorant réactif, dans lequel on utilise un colorant selon au moins une des revendications qui précédent.

10. Supports teints ou imprimés, qui ont été teints en partie au moins à l'aide d'un colorant selon au moins une des revendications qui précédent.
